# EUROPÄISCHE PATENTANMELDUNG

(11) **EP 4 241 961 A2**
(43) Veröffentlichungstag der Anmeldung: **13.09.2023**
(21) Anmeldenummer: 22215469.2
(22) Anmeldetag: 21.12.2022
(51) Int. Cl.: B29C 49/78, B29C 49/06, B29C 49/36, B29C 49/42, B29K 67/00, B29L 31/00

(54) **VENTILVERSCHLEISSÜBERWACHUNG**

(30) Priorität: 08.03.2022 DE 102022105440
(71) Anmelder: Krones AG, 93073 Neutraubling (DE)
(72) Erfinder: Winzinger, Frank, 93073 Neutraubling (DE)
(74) Vertreter: Hannke Bittner & Partner mbB Regensburg

(57) **Zusammenfassung**

Die Erfindung betrifft eine Vorrichtung und ein Verfahren zum Behandeln von Behältnissen mit einer Transportvorrichtung zum Transport eines Behältnisses entlang eines vorgegebenen Transportpfads, wobei die Vorrichtung wenigstens eine Behältnisbehandlungseinrichtung und bevorzugt eine Vielzahl von Behältnisbehandlungseinrichtungen aufweist, wobei die wenigstens eine Behältnisbehandlungseinrichtung wenigstens ein Verschleißelement aufweist, wobei die wenigstens eine Behältnisbehandlungseinrichtung eine Verschleißerkennungseinrichtung zur Erfassung von Verschleißdaten in Bezug auf einen Verschleiß des wenigstens einen Verschleißelements aufweist. Erfindungsgemäß weist die Verschleißerkennungseinrichtung wenigstens eine Sensoreinrichtung zur Erfassung der Verschleißdaten in Bezug auf den Verschleiß des wenigstens einen Verschleißelements auf.

## Beschreibung

Die vorliegende Erfindung bezieht sich auf Vorrichtungen und Verfahren zum Behandeln von Behältnissen.

Im Bereich der getränkeherstellenden Industrie ist die Verwendung von Kunststoffbehältnissen, z.B. PET-Flaschen und deren Herstellung in Blasformmaschinen seit langem bekannt. Beispielsweise gibt es Blasmaschinen zur Herstellung von Kunststoffbehältnissen, bei welchen eine Vielzahl von Blasstationen auf einem rundlaufenden Transportrad angeordnet sind und bei welchen erwärmte Vorformlinge kontinuierlich in die Blasstationen eingegeben werden, um diese - nach dem Schließen der Blasform und dem Abdichten - gegen die Innenwände der Blasform mittels Druckluft, teilweise jedoch auch mittels Flüssigkeit - zu expandieren.

Zur Bereitstellung von Druckluft befindet sich üblicherweise auf jeder Blasstation eine Ventileinheit, die die Zuleitung und auch (meistens) die Ableitung von Blasluft zu und aus den Kunststoffbehältnissen mittels Ventilen steuert.

Ebenfalls ist es bekannt, besagte Vorformlinge zunächst mit einem ersten Druck und zumindest zeitweise gleichzeitigem Recken mittels einer Reckstange vorzublasen und die Vorformlinge anschließend mit einem zweiten Druck, der größer ist als der erste Druck, fertigzublasen, wobei hierzu meistens zwei Druckluftspeicher, für den ersten und den zweiten Druck, vorhanden sind und zwei den jeweiligen Druckluftspeichern zugeordnete Ventile zum Freigeben der Leitung vom Druckluftspeicher in den zu formenden Vorformling angebracht sind. Üblicherweise ist auch ein zusätzliches Ventil zur Ableitung der Druckluft, beispielsweise in einen Schalldämpfer und/oder in die Umgebung vorgesehen.

Die hierbei verwendeten Ventile stellen im Allgemeinen Verschleißteile dar und müssen daher von Zeit zu Zeit ausgetauscht werden. Der Zeitpunkt des Austauschens sollte im Optimalfall so gewählt werden, dass die entsprechenden Ventile zwar noch ihre Funktion erfüllen, aber kurz vor dem Ende ihrer Lebenszeit stehen. Um den optimalen Zeitpunkt für Wartungsarbeiten zum Auswechseln der Ventile bedarf es einer Überwachung des Verschleißzustandes der Ventile.

Im Stand der Technik ist aus der WO 2020/226921 A1 ein System bekannt, welches im Rahmen einer Anlage zur Herstellung von Behältnissen eine Sensoreinrichtung aufweist, zur Erfassung von Daten in Bezug auf den Herstellungsprozess und in Bezug auf das hergestellte Behältnis. Dies kann beispielsweise durch Sensoren zur Bestimmung der Umgebungstemperatur, des Atmosphärendrucks, der Luftfeuchtigkeit oder des Stromverbrauchs der Anlage erfolgen oder durch Sensoren der Blasform beispielsweise umfassend einen Ofentemperatursensor, Drucksensor, Formtemperatursensor und dergleichen. Ebenso kann beispielswiese die Wanddicke der hergestellten Behältnisse erfasst werden. Ausgehend von den erfassten Daten kann das System Vorschläge für Wartungsarbeiten ausgeben, beispielsweise einen Vorschlag zum Austausch einer Dichtung der Blasmaschine oder einer Düse der Blasmaschine usw.

Die im Stand der Technik bekannten Systeme zur Überwachung von Bestandteilen der Anlage zur Herstellung von Behältnissen, insbesondere in Bezug auf Verschleißteile haben den Nachteil, dass die Erfassung von Daten indirekt erfolgt und dadurch ungenau ist und sich beispielsweise nicht einem einzelnen Ventil, sondern nur einer ganzen Ventilanordnung zuordnen lassen.

Der vorliegenden Erfindung liegt daher die Aufgabe zugrunde, die im Stand der Technik bekannten Nachteile zu überwinden und ein geeignetes System zur genaueren Überwachung von Verschleißteilen bereitzustellen. Diese Aufgabe wird erfindungsgemäß durch zwei Vorrichtungen und zwei Verfahren nach den unabhängigen Ansprüchen erreicht. Vorteilhafte Ausführungsformen und Weiterbildungen sind Gegenstand der Unteransprüche.

Eine erfindungsgemäße Vorrichtung zum Behandeln von Behältnissen weist eine Transportvorrichtung zum Transport eines Behältnisses (und bevorzugt einer Vielzahl von Behältnissen) entlang eines vorgegebenen Transportpfads auf, wobei die Vorrichtung wenigstens eine Behältnisbehandlungseinrichtung und bevorzugt eine Vielzahl von Behältnisbehandlungseinrichtungen aufweist. Die wenigstens eine Behältnisbehandlungseinrichtung weist wenigstens ein Verschleißelement und bevorzugt eine Vielzahl von Verschleißelementen auf, wobei die wenigstens eine Behältnisbehandlungseinrichtung eine Verschleißerkennungseinrichtung zur Erfassung von Verschleißdaten in Bezug auf einen Verschleiß des wenigstens einen Verschleißelements aufweist.

Erfindungsgemäß weist die Verschleißerkennungseinrichtung wenigstens eine Sensoreinrichtung zur Erfassung der Verschleißdaten in Bezug auf den Verschleiß des wenigstens einen Verschleißelements auf.

Bevorzugt handelt es bei dem zu behandeln Behältnis um ein Kunststoffbehältnis, beispielsweise um ein PET-Kunststoffbehältnis. Bevorzugt handelt es sich um einen Kunststoffvorformling und besonders bevorzugt um eine Kunststoffflasche. Bevorzugt handelt es sich bei der Vorrichtung um eine Vorrichtung zum Umformen von Kunststoffvorformlingen zu Kunststoffbehältnissen und insbesondere Kunststoffflaschen.

Bevorzugt handelt es sich bei der Behältnisbehandlungseinrichtung, d.h. der oben erwähnten Vorrichtung um eine Blasformmaschine zur Herstellung von Kunststoffbehältnissen oder besonders bevorzugt um eine Abfülleinrichtung zum Befüllen von Behältnissen. Weiterhin ist es denkbar, dass es sich bei der Behältnisbehandlungseinrichtung um eine Anlage zur Desinfektion von Behältnissen, insbesondere von Kunststoffflaschen oder Kunststoffvorformlingen, bevorzugt um eine Etikettieranlage, besonders bevorzugt um eine Verpackungsanlage oder bevorzugt um eine Reinigungsanlage handelt.

Bevorzugt weist die Behältnisbehandlungseinrichtung wenigstens ein Verschleißelement und besonders bevorzugt eine Vielzahl von Verschleißelementen auf. Bevorzugt handelt es sich bei dem Verschleißelement um ein Ventil zur Zu- und/oder Abführung eines fließfähigen Mediums, insbesondere zur Zu- und/oder Abführung von Druckluft. Weiterhin ist es denkbar, dass es sich bei dem Verschleißelement um ein Ventil für die Zu- und/oder Abführung eines flüssigen Mediums, beispielsweise eines abzufüllenden Getränks, ein Desinfektionsmittel oder dergleichen handelt. Beispielsweise kann es sich bei dem Ventil um ein Zweiwegeventil oder ein Dreiwegeventil handeln.

Auch kann es sich bei dem Ventil um ein bzgl. Durchfluss verstellbares Ventil handeln, bei welchem beispielsweise ein maximaler Durchfluss von dem fließfähigen Medium einstellbar ist. Das im Durchfluss verstellbare Ventil kann stufenlos auf unterschiedliche Öffnungsquerschnitte bzw. Ventilkolbenpositionen einstellbar sein. Es kann sich z.B. um ein Proportionalventil handeln.

Bevorzugt weist die wenigstens eine Behältnisbehandlungseinrichtung wenigstens eine Verschleißerkennungseinrichtung auf und bevorzugt eine Vielzahl von Verschleißerkennungseinrichtungen zur Erfassung eines Verschleißverhaltens des wenigstens einen Verschleißelements.

Bevorzugt ist eine Verschleißerkennungseinrichtung für die Überwachung des Verschleißverhaltens eines Verschleißelements und besonders bevorzugt für die Überwachung des Verschleißverhaltens einer Vielzahl von Verschleißelementen eingerichtet. Bevorzugt überwacht eine Verschleißerkennungseinrichtung das Verschleißverhalten eines Verschleißelements intervallmäßig (z.B. jede Umdrehung eines Blasrades oder einmal am Tag oder einmal pro Stunde) und besonders bevorzugt kontinuierlich.

Bevorzugt umfasst das Verschleißverhalten eines Verschleißelements eine Abnutzung eines (beweglichen) Bestandteils, besonders bevorzugt einen Abrieb eines solchen Bestandteils. Bevorzugt ist das Verschleißverhalten eines Verschleißteils abhängig von dem Material, aus dem das Verschleißelement gefertigt ist und besonders bevorzugt von dem Material aus welchen ein mit dem Verschleißelement in Kontakt stehendes Element gefertigt ist. Beispielsweise ist das Verschleißverhalten eines Ventils, insbesondere eines Ventilkolbens abhängig von dessen Material und bevorzugt abhängig von dem Material der Kontaktfläche, beispielsweise dem Ventilsitz, auf welcher der Ventilkolben in einem geschlossenen Zustand des Ventils anliegt.

Das Verschleißelement kann beispielsweise zumindest bereichsweise einen Kunststoff aufweisen, welcher verschleißt. Das mit dem Verschleißelement in Kontakt stehende Element kann zumindest bereichsweise ein Metall bzw. eine metallaufweisende Legierung umfassen. Im Fall eines Ventils kann eine Kontaktfläche eines Ventilkolbens des Ventils, welche die Funktion einer Dichtfläche übernimmt, Kunststoff aufweisen. Bevorzugt kann der Hauptteil des Ventilkolbens aus Kunststoff bestehen. Die Fläche des Ventilsitzes, an der der Kolben anliegt, kann besagtes Metall bzw. besagte Legierung aufweisen. Besagter Kunststoff kann PET aufweisen oder PET sein.

Bevorzugt ist das Verschleißverhalten des Verschleißelements abhängig von den Betriebsbedingungen. Beispielsweise hängt das Verschleißverhalten von der Betriebstemperatur oder dem Betriebsdruck ab oder kann hiervon abhängen. Im Falle eines Ventils ist das Verschleißverhalten beispielsweise abhängig von der Beschaffenheit des durchtretenden fließfähigen Mediums. Beispielsweise handelt es sich bei dem fließfähigen Medium um Druckluft, um ein Gas zur Desinfektion, welches unter Umständen korrodierende Eigenschaften aufweist, um eine abzufüllende Flüssigkeit oder ein flüssiges Sterilisationsmittel, welche unter Umständen korrodierende Eigenschaften aufweisen und/oder zur Ausbildung von festen Ablagerungen neigen. Im Falle von Gasen ist das Verschleißverhalten abhängig von den vorherrschenden Druckverhältnissen. Weiterhin umfasst das Verschleißverhalten eines Verschleißelements, insbesondere eines Ventils das Verschleißverhalten von mit dem Verschleißelement assoziierten Dichtungen. Beispielsweise ist das Verschleißverhalten von solchen Dichtungen ebenfalls von den genannten Faktoren (wie Temperatur, Druck, Art und Eigenschaften des durchtretenden Mediums) abhängig.

Erfindungsgemäß weist die wenigstens eine Verschleißerkennungseinrichtung wenigstens eine Sensoreinrichtung zur direkten Erfassung des Verschleißverhaltens des wenigstens einen Verschleißelements auf.

Bevorzugt weist die wenigstens eine Sensoreinrichtung ein herkömmliches Strom-, Spannungs- oder Widerstandsmessgerät auf, welches dazu geeignet und bestimmt ist, einen Stromfluss, eine Spannung oder einen Widerstand zu messen. Bevorzugt ist die Sensoreinrichtung dazu eingerichtet, ein Signal an die wenigstens eine Verschleißerkennungseinrichtung und/oder an eine Steuerung auszugeben und bevorzugt ist die wenigstens eine Sensoreinrichtung Teil der wenigstens einen Verschleißerkennungseinrichtung.

Unter einer direkten Erfassung wird in diesem Zusammenhang verstanden, dass die Sensoreinrichtung oder zumindest ein Teil der Sensoreinrichtung direkt an dem zu überwachenden Verschleißelement angeordnet ist oder zumindest in einer räumlichen Nähe angeordnet ist, beispielsweise in einem Umkreis von 10 cm um das zu überwachende Verschleißelement.

Dies bietet den Vorteil, dass das Verschleißverhalten eines Verschleißelements direkt und unmittelbar erfasst wird und nicht - wie aus dem Stand der Technik bekannt ist - indirekt bestimmt wird. Auf diese Weise ist ein direkter Rückschluss auf die Lebensdauer (bevorzugt auch im Rahmen einer Online-Messung) möglich. Im Gegensatz zu bekannten Systemen ist es möglich, ein individuelles Verschleißelement zu überwachen. Beispielsweise erlauben aus dem Stand der Technik bekannte Systeme einen Rückschluss auf das Verschleißverhalten einer gesamten Ventilanordnung einer Blasstation einer Blasformmaschine, während im Rahmen der vorliegenden Erfindung ein Rückschluss auf jedes einzelne Ventil für sich möglich ist.

Bevorzugt ist die Sensoreinrichtung einem zu überwachenden Verschleißelement zugeordnet, besonders bevorzugt ist wenigstens ein Bestandteil der Sensoreinrichtung unmittelbar an dem Verschleißelement angeordnet. Bevorzugt umfasst die Verschleißerkennungseinrichtung wenigstens eine und besonders bevorzugt eine Vielzahl von Sensoreinrichtungen. Bevorzugt weisen wenigstens zwei und besonders bevorzugt eine Vielzahl von Sensoreinrichtungen gemeinsame Bestandteile auf.

Bevorzugt erfasst die Sensoreinrichtung Verschleißdaten in Bezug auf das Verschleißverhalten eines Verschleißelements und besonders bevorzugt sind die erfassten Verschleißdaten charakteristisch für einen momentanen Zustand des Verschleißelements.

Bevorzugt erfasst die Sensoreinrichtung die Verschleißdaten kontinuierlich und besonders bevorzugt kann aus den erfassten Daten auf das Verschleißverhalten und/oder den Zustand des Verschleißelements zurück geschlossen werden. Bevorzugt erfasst die Sensoreinrichtung Verschleißdaten in Bezug auf das Verschleißverhalten in Abhängigkeit von einem Zustand des Verschleißelements. Bevorzugt erfasst die Sensoreinrichtung erst Verschleißdaten, wenn ein gewisser Grad der Abnutzung des Verschleißteils erreicht ist. Bevorzugt ist in diesem Zustand das Verschleißteil noch funktionstüchtig, sollte aber bevorzugt zeitnah ausgetauscht werden. Bevorzugt erfasst die Sensoreinrichtung kontinuierlich Verschleißdaten in Bezug auf das Verschleißverhalten eines Verschleißelements und ermöglicht besonders bevorzugt eine Echtzeitüberwachung des Verschleißelements und bevorzugt während der kompletten Lebensdauer des Ventils.

Bei einer vorteilhaften Ausführungsform handelt es sich bei dem wenigstens einen Verschleißelement um ein Ventil und/oder einen Ventilkolben eines Ventils zur Zu- und/oder Abführung eines fließfähigen Mediums.

Bevorzugt umfasst das Ventil einem Ventilkolben, welcher innerhalb einer Ventilhülse bewegt werden kann und bevorzugt gegenüber dieser abgedichtet ist. Bevorzugt ist die Ventilhülse an einem Ventilblock angeordnet und besonders bevorzugt ein Teil des Ventilblocks. Bevorzugt weist das Ventil ein Vorsteuerventil zur Steuerung der Bewegung des Ventilkolbens auf und besonders bevorzugt ist das Vorsteuerventil an dem Ventil angeordnet.

Bevorzugt ist ein Teil der Sensoreinrichtung an dem Ventilkolben eines Ventils zur Zu- und/oder Abführung eines fließfähigen Mediums angeordnet und besonders bevorzugt ist ein Teil der Sensoreinrichtung ein Bestandteil des Ventilkolbens. Bevorzugt weist der Ventilkolben einen Kopfbereich auf, welcher einen größeren Durchmesser als der restliche Ventilkolben aufweist.

Bevorzugt ist der Übergang des restlichen Ventilkolbens auf den Kopfbereich des Ventilkolbens stufenförmig ausgebildet und besonders bevorzugt entspricht der stufenförmige Bereich (senkrecht zur Längsrichtung des Ventilkolbens) einer Stufenfläche des Kopfbereichs. Bevorzugt weist der Ventilkolben eine Kontaktfläche auf, welche in einem geschlossenen Zustand des Ventils auf einer zugeordneten Kontaktfläche (der Behältnisbehandlungseinrichtung) aufliegt, beispielsweise auf dem Rand einer Durchlassöffnung eines Ventilblocks und/oder einem Ventilsitz. Bevorzugt übernimmt die Kontaktfläche des Ventilkolbens eine abdichtende Funktion zwischen dem Einlass und den Auslass des Ventils in einer geschlossenen Stellung des Ventils. Bevorzugt ist der Ventilkolben aus einem weicheren Material gefertigt als die der Kontaktfläche des Ventilkolbens zugeordnete Kontaktfläche (der Behältnisbehandlungseinrichtung).

Bevorzugt ist ein Teil der Sensoreinrichtung an einer Fläche des Ventilkolbens angeordnet, wobei es sich bei der Fläche bevorzugt um eine Stufenfläche (des Kopfbereichs) des Ventilkolbens oder bevorzugt um eine Kontaktfläche des Ventilkolbens handelt. Bevorzugt ist ein Teil der Sensoreinrichtung an der Behältnisbehandlungseinrichtung und besonders bevorzugt an der Ventilhülse angeordnet.

Bei einer vorteilhaften Ausführungsform weist eine Fläche des Ventilkolbens und eine zugeordnete Kontaktfläche der wenigstens einen Behältnisbehandlungseinrichtung, insbesondere des Ventils, zumindest bereichsweise ein elektrisch leitfähiges Material auf. Bevorzugt handelt es sich bei der Fläche um eine Stufenfläche (des Kopfbereichs) des Ventilkolbens oder in seltenen Fällen um eine Kontaktfläche des Ventilkolbens. Bevorzugt handelt es sich bei dem elektrisch leitfähigen Material um einen metallischen Werkstoff und besonders bevorzugt um eine metallische Beschichtung. Bevorzugt weist die zugeordnete Kontaktfläche der wenigstens einen Behältnisbehandlungseinrichtung, insbesondere des Ventils wenigstens zwei Bereiche auf, welche ein elektrisch leitfähiges Material aufweisen. Besonders bevorzugt sind die wenigstens zwei Bereiche voneinander beanstandet und weisen keine elektrisch leitfähige Verbindung zueinander auf. Bevorzugt weist die Fläche des Ventilkolben ein elektrisch leitfähiges Material und besonders bevorzugt eine elektrisch leitfähige Beschichtung über den gesamten Umfang der Fläche auf.

Bevorzugt ist das Ventil, insbesondere der Ventilkolben und die wenigstens eine Behältnisbehandlungseinrichtung, insbesondere die Ventilhülse derart gestaltet, dass der Abstand zwischen dem Kopfbereich des Ventilkolbens, genauer gesagt der Stufenfläche des Ventilkolbens und der Ventilhülse, insbesondere dem Bereich der zugeordneten Kontaktfläche der wenigstens einen Behältnisbehandlungseinrichtung, insbesondere der Ventilhülse abhängig von dem Grad des Verschleißes des Ventils und insbesondere von dem Grad des Verschlei-βes des Ventilkolbens ist.

Bevorzugt sind die Stufenfläche des Ventilkolbens und die zugeordnete Kontaktflächen der Behältnisbehandlungseinrichtung, insbesondere der Ventilhülse im Fall eines nicht verschlissenen Ventils voneinander beabstandet, insbesondere unabhängig von der Bewegung des Ventilkolbens während des Übergangs von einem geschlossenen in einen geöffneten Zustand oder umgekehrt. Bevorzugt vergrößert sich der zurückgelegte Weg des Ventilkolbens bei einem Übergang von einem geschlossenen in einen geöffneten Zustand oder umgekehrt in Abhängigkeit von dem Grad des Verschleißes des Ventils und insbesondere in Abhängigkeit von dem Grad des Verschleißes des Ventilkolbens. Ab einem gewissen Grad des Verschleißes des Ventils und insbesondere des Ventilkolbens berühren sich in einem geschlossenen Zustand des Ventils die Stufenfläche des Ventilkolbens, genauer gesagt das elektrisch leitfähige Material der Stufenfläche und die zugeordneten Kontaktfläche der wenigstens einen Behältnisbehandlungseinrichtung, insbesondere der Ventilhülse, genauer gesagt das elektrisch leitfähige Material der zugeordneten Kontaktflächen der wenigstens einen Behältnisbehandlungseinrichtung, insbesondere der Ventilhülse.

Bevorzugt ist in Abhängigkeit von dem Verschleißverhalten des Ventils und besonders bevorzugt in Abhängigkeit von dem Verschleißverhalten des Ventilkolbens ein Kontakt zwischen der Stufenfläche des Ventilkolbens und der zugeordneten Kontaktfläche der wenigstens einen Behältnisbehandlungseinrichtung, insbesondere der Ventilhülse herstellbar. Bei einer vorteilhaften Ausführungsform ist durch einen Kontakt zwischen der Fläche des Ventilkolbens, wobei es sich bevorzugt bei der Fläche um die Stufenfläche (des Kopfbereichs) des Ventilkolbens oder bevorzugt um die Kontaktfläche des Ventilkolbens handelt und der zugeordneten Kontaktfläche der Behältnisbehandlungseinrichtung, bevorzugt der Kontaktfläche der Ventilhülse ein Stromkreis schließbar.

Bei einer vorteilhaften Ausführungsform ist die wenigstens eine Sensoreinrichtung dazu geeignet und bestimmt, einen Stromfluss in dem geschlossenen Stromkreis zu erfassen. Bevorzugt weist die wenigstens eine Sensoreinrichtung eine Strom- bzw. Spannungsquelle und ein Messgerät zur Erfassung eines Stromflusses auf. Bevorzugt ist je einer der wenigstens zwei Bereiche der zugeordneten Kontaktfläche der wenigstens einen Behältnisbehandlungseinrichtung bzw. der Ventilhülse und genauer gesagt die elektrisch leitfähigen Materialien je eines der wenigstens zwei Bereiche der zugeordneten Kontaktfläche der wenigstens einen Behältnisbehandlungseinrichtung bzw. der Ventilhülse mit je einem Pol der Stromquelle verbunden.

Bevorzugt ist zwischen einem Pol der Stromquelle und der Kontaktfläche der wenigstens einen Behältnisbehandlungseinrichtung bzw. der Ventilhülse ein Messgerät zur Erfassung eines Stromflusses angeordnet.

Im Fall eines nicht-verschlissenen Ventils besteht in einem geschlossenen Zustand des Ventils kein Kontakt zwischen dem elektrisch leitfähigen Material der Fläche des Ventilkolbens, wobei es sich bevorzugt bei der Fläche um die Stufenfläche (des Kopfbereichs) des Ventilkolbens oder bevorzugt um die Kontaktfläche des Ventilkolbens handelt und dem elektrisch leitfähigen Material der zugeordneten Kontaktflächen der wenigstens einen Behältnisbehandlungseinrichtung bzw. der Ventilhülse und damit ist auch kein Stromkreis geschlossen und entsprechend kein Stromfluss messbar. Im Fall eines verschlissenen Ventils berühren sich in einem geschlossenen Zustand des Ventils das elektrisch leitfähige Material der Fläche des Ventilkolbens, wobei es sich bevorzugt bei der Fläche um die Stufenfläche (des Kopfbereichs) des Ventilkolbens oder bevorzugt um die Kontaktfläche des Ventilkolbens handelt und das elektrisch leitfähige Material der zugeordneten Kontaktflächen der wenigstens einen Behältnisbehandlungseinrichtung bzw. der Ventilhülse, wodurch ein Stromkreis geschlossen ist und das Messgerät einen Stromfluss erfassen kann.

Bei einer weiteren vorteilhaften Ausführungsform weist die Kontaktfläche des Ventilkolbens, welche bevorzugt in einem geschlossen Zustand des Ventils mit einer zugeordneten Kontaktfläche (der Behältnisbehandlungseinrichtung, insbesondere des Ventilblocks, beispielsweise der Rand einer Durchlassöffnung, welche den Eintritt eines fließfähigen Mediums durch das Ventil in den Ventilblock ermöglicht) in unmittelbaren Kontakt steht und bevorzugt eine abdichtende Funktion übernimmt, ein elektrisch leitfähiges Material, bevorzugt eine metallische Beschichtung auf. Es wäre auch denkbar, dass auch der ganze Ventilkolben ein elektrisch leitfähiges Material aufweist.

Bevorzugt weist die zugeordnete Kontaktfläche der wenigstens einen Behältnisbehandlungseinrichtung und insbesondere die des Ventilblocks ein elektrisch leitfähiges Material, insbesondere eine metallische Beschichtung auf, welche mit einem (weichen) Kunststoff beschichtet ist. Bevorzugt unterscheidet sich das Verschleißverhalten des Ventils in dieser Ausführungsform von den anderen Ausführungsformen der vorliegenden Erfindung. Bevorzugt ist der Ventilkolben und insbesondere die Kontaktfläche des Ventilkolbens aus einem härteren Material gefertigt als die Kunststoffbeschichtung der zugeordneten Kontaktfläche der wenigstens einen Behältnisbehandlungseinrichtung und insbesondere die des Ventilblocks.

In dieser Ausführungsform verschleißt mit der Zeit nicht der Ventilkolben bzw. die Kontaktfläche des Ventilkolbens, sondern die Kunststoffbeschichtung der zugeordneten Kontaktfläche.

Bei einem gewissen Grad des Verschleißes ist die Kunststoffschicht der Kontaktfläche soweit abgerieben bzw. entfernt worden, dass das elektrisch leitfähige Material der zugeordneten Kontaktfläche freigelegt ist. In diesem Zustand kann durch eine Berührung der Kontaktfläche des Ventilkolbens, insbesondere dessen elektrisch leitfähiges Material mit der freigelegten elektrisch leitfähigen Beschichtung der zugeordneten Kontaktfläche der wenigstens einen Behältnisbehandlungseinrichtung und insbesondere die des Ventilblocks ein Stromkreis geschlossen werden und der Stromfluss durch ein Messgerät erfasst werden.

Bei einer vorteilhaften Ausführungsform die Fläche des Ventilkolbens in einem Winkel > 1° und < 179° auf einen Vektor einer Bewegungsrichtung des Ventilkolbens, entlang welcher der Ventilkolben beim Öffnen oder Schließen des Ventils bewegt wird. Bevorzugt ist der Winkel zwischen 30° und 150°, bevorzugt zwischen 60° und 120°und besonders bevorzugt genau 90°. Durch den Winkel kann die Fläche einen Anschlag in Laufrichtung des Ventilkolbens bilden und somit einen Kontakt mit einer zugeordneten Kontaktfläche der wenigstens einen Behältnisbehandlungseinrichtung und insbesondere die des Ventilblocks herstellen.

Bevorzugt steht die zugeordneten Kontaktfläche der wenigstens einen Behältnisbehandlungseinrichtung und insbesondere die des Ventilblock in einem Winkel > 1° und < 179° auf einen Vektor einer Bewegungsrichtung des Ventilkolbens, entlang welcher der Ventilkolben beim Öffnen oder Schließen des Ventils bewegt wird. Auch bei dieser beträgt der Winkel bevorzugt zwischen 30° und 150°, bevorzugt zwischen 60° und 120°und besonders bevorzugt genau 90°.

Bei einer weiter bevorzugten Ausführungsform weist die Fläche des Ventilkolbens, wobei es sich bevorzugt bei der Fläche um die Stufenfläche (des Kopfbereichs) des Ventilkolbens oder bevorzugt um die Kontaktfläche des Ventilkolbens handelt und die zugeordnete Kontaktfläche der wenigstens einen Behältnisbehandlungseinrichtung bzw. die der Ventilhülse kein elektrisch leitfähiges Material auf. In einer vorteilhaften Ausführungsform weist die wenigstens eine Behältnisbehandlungseinrichtung einen metallischen Kippschalter auf, welcher dazu geeignet und bestimmt ist, bei einem Kontakt mit der Fläche des Ventilkolbens, bevorzugt mit der Stufenfläche (des Kopfbereichs) des Ventilkolbens einen elektrischen Stromkreis zu schließen.

Bevorzugt ist der metallische Kippschalter an der wenigstens einen Behältnisbehandlungseinrichtung angeordnet. Bevorzugt ist der metallische Kippschalter in einem Bereich der wenigstens einen Behältnisbehandlungseinrichtung, insbesondere in einem Bereich der Ventilhülse angeordnet, in welchem der metallische Kippschalter in Abhängigkeit von dem Verschleiß des Ventilkolben von dem Kopfbereich des Ventilkolbens, besonders bevorzugt durch dessen Stufenfläche kontaktierbar ist. Bevorzugt ist der metallische Kippschalter derart angeordnet, dass im Falle eines nicht-verschlissenen Ventils kein Kontakt zwischen dem metallischen Kippschalter und dem Kopfbereich des Ventilkolbens, besonders bevorzugt dessen Stufenfläche herstellbar ist. Bevorzugt ist der metallische Kippschalter derart angeordnet, dass im Falle eines verschlissenen Ventils ein Kontakt zwischen dem metallischen Kippschalter und dem Kopfbereich des Ventilkolbens, besonders bevorzugt dessen Stufenfläche herstellbar ist.

Bevorzugt ist der metallische Kippschalter beweglich gelagert und besonders bevorzugt um eine Schwenkachse zumindest teilweise schwenkbar. Bevorzugt weist der metallische Kippschalter einen ersten Bereich auf, welcher durch den Kopfbereich des Ventilkolbens kontaktierbar ist und bevorzugt einen zweiten Bereich auf, welcher dazu geeignet und bestimmt ist einen unterbrochenen Stromkreis zu schließen. Bevorzugt bewirkt eine Krafteinwirkung auf den ersten Bereich des metallischen Kippschalters (Kontaktierung durch den Kopfbereich des Ventilkolbens) eine (Schwenk)-Bewegung des metallischen Kippschalters derart, dass der zweite Bereich des metallischen Kippschalters eine entsprechende und bevorzugt komplementäre Bewegung ausführt. Diese Bewegung entspricht hierbei einer Schwenkbewegung um eine Schwenkachse. Bevorzugt ist der Bewegungsradius des metallischen Kippschalters abhängig von dem Grad des Verschleißes des Ventils bzw. des Ventilkolbens. Dies bedeutet mit anderen Worten, je weiter der Ventilkolben verschlissen ist, desto größer ist der Bewegungsradius des metallischen Kippschalters. Dies bedeutet für den Fall, dass das Ventil nur geringfügig verschlissen ist, dass in einem geschlossenen Zustand des Ventils der metallische Kippschalter nur geringfügig ausgelenkt wird und ein elektrischer Stromkreis noch nicht durch den zweiten Bereich des metallischen Kippschalters geschlossen werden kann. Im Fall eines ausgeprägteren Verschleißes des Ventilkolbens wird in einem geschlossenen Zustand des Ventils der metallische Kippschalter weiter ausgelenkt, sodass der zweite Bereich des metallischen Kippschalters einen Stromkreis schließen kann, was von der Sensoreinrichtung registriert werden kann.

Es ist auch denkbar, dass anstelle eines Kippschalters auch andere (Bau-)Formen eines Schalters verwendet werden, beispielsweise solche die linear beweglich sind.
In einer weiteren vorteilhaften Ausführungsform weist die wenigstens eine Sensoreinrichtung einen Induktionssensor auf, welcher dazu geeignet und bestimmt ist, den Abstand zwischen der Fläche des Ventilkolbens, bevorzugt der Stufenfläche (des Kopfbereichs) des Ventilkolbens und dem Induktionssensor zu erfassen.

Bevorzugt ist der Induktionssensor an der wenigstens einen Behältnisbehandlungseinrichtung, insbesondere an der Ventilhülse angeordnet. Bevorzugt weist die Fläche des Ventilkolbens, bevorzugt die Stufenfläche (des Kopfbereichs) des Ventilkolbens ein elektrisch leitfähiges Material, insbesondere eine metallische Beschichtung auf. Durch die Bewegung des Ventilkolbens während des Übergangs zwischen einer geschlossenen und geöffneten Stellung des Ventils wird in dem Induktionssensor ein Stromfluss induziert, welcher als Signal erfasst werden kann. In Abhängigkeit von dem Grad des Verschleißes des Ventilkolbens ändert sich der zurückgelegte Weg während des Übergangs zwischen einer geschlossenen und geöffneten Stellung des Ventils und somit der Abstand zwischen der Fläche, bevorzugt der Stufenfläche (des Kopfbereichs) des Ventilkolbens bzw. deren elektrisch leitfähigen Material und dem Induktionssensor, wodurch ein unterschiedlicher Stromfluss induziert wird. Das bietet den Vorteil, dass das Verschleißverhalten des Ventils, genauer gesagt des Ventilkolbens, während jeder Bewegung des Ventilkolbens erfasst werden kann. Dies bietet weiterhin den Vorteil, dass jeder Zustand (neu, wenig verschlissen, stark verschlissen) des Ventilkolbens über die gesamte Lebenszeit des Ventils kontinuierlich und bevorzugt in Echtzeit erfasst und ausgewertet werden kann.

Bei einer weiteren bevorzugten Ausführungsform können pro Verschleißelement wenigstens zwei oder bevorzugt mehr als zwei Sensoreinrichtungen bzw. (Kipp-)Schalter vorgesehen sein, wobei bevorzugt eine Sensoreinrichtung dazu vorgesehen ist, dass eine Vorwarnung ausgegeben werden kann, bevor bevorzugt eine zweite Sensoreinrichtung kurz vor einem endgültigen Versagen des Verschleißelements, d.h. ab einem gewissen Grad des Verschlei-βes des Verschleißelements eine Warnung ausgibt oder einen endgültigen Verschleiß des Verschleißelements feststellt.

Bei einer bevorzugten Ausführungsform können die wenigstens zwei oder bevorzugt mehr als zwei Sensoreinrichtungen an unterschiedlichen Positionen entlang des Bewegungspfads des Verschleißelements angeordnet sein.

In einer weiteren Ausführungsform ist es denkbar, dass das Verschleißelement durch einen elektrischen Motor bewegt wird. Bei der wenigstens einen Sensoreinrichtung kann es sich um einen Geber, bevorzugt um einen Inkrementalgeber bzw. Drehwertgeber des Motors handeln, über welchen eine Position des Motors und somit indirekt eine Position des Verschleißelements erfasst wird.

Der Motor kann bevorzugt kraftgesteuert sein und das Verschleißelement mit einer definierten Kraft gegen einen Anschlag bewegen. Handelt es sich bei dem Verschleißelement um einen Ventilkolben, so kann der Motor diesen mit einer definierten Kraft gegen die zugeordnete Kontaktfläche der wenigstens einen Behältnisbehandlungseinrichtung und insbesondere die des Ventilblocks drücken, bevorzugt mit einer Kraft, die größer ist als die durch den Druck des fließfähigen Mediums während der Behandlung des Behälters ausgelöste Kraft auf das Verschleißelement.

Bevorzugt sind Daten in Bezug auf die Position des Motors bzw. des Gebers und damit bevorzugt Daten in Bezug auf die Position des Verschleißelements in einem Neuzustand des Verschleißelements und besonders bevorzugt in einer Endstellung des Verschleißelements in einer zugeordneten Steuerungseinrichtung bzw. Speichereinrichtung abgelegt. Bevorzugt beinhalten die abgelegten Daten einen (Soll-)Wert für eine vorgegebene Kraft in dieser Position. Bevorzugt ist der Motor dazu eingerichtet das Verschleißelement soweit zu bewegen, bis die vorgegebene Kraft erreicht ist.

Wird die vorgegebene Kraft erst bei einer (End-)Position des Motors bzw. des Verschleißelements erreicht, welche weiter entfernt ist von einer Startposition bezogen auf eine Bewegung des Verschleißelements im Vergleich zu einer Bewegung des Verschleißelements in einem Neuzustand des Verschleißelements, so kann auf einen Verschleiß des Verschleißelements zurückgeschlossen werden. Bevorzugt korreliert die Position des Verschleißelements direkt mit dem Grad des Verschleißes des Verschleißelements.

In einer alternativen Ausführungsform ist ein Sollwertbereich und bevorzugt ein Sollwert für eine Position des Verschleißelements in einer Endstellung vorgegeben sein. Überschreitet das Verschleißelement diesen Sollwert bzw. diesen Sollwertbereich, so kann ein Verschleiß des Verschleißelements festgestellt werden. Bevorzugt korreliert der Grad des Verschleißes des Verschleißelements direkt mit dem Ausmaß der Überschreitung des Sollwerts. Bevorzugt sind mehrere Sollwertbereiche vorgegeben, wobei eine Überschreitung der entsprechenden Sollwertbereiche verschiedenen Graden des Verschleißes zugeordnet werden können. So kann es vorgesehen sein, dass eine Überschreitung einer Grenze eines kleineren Sollwertbereichs einem geringfügigen Verschleiß des Verschleißelements entspricht oder eine Überschreitung einer Grenze eines größeren Sollwertbereichs einem ausgeprägterem Grad des Verschleißes entspricht.

Bevorzugt kann durch eine kontinuierliche Messung, wie es z.B. durch die Verwendung eines Induktionssensors wie oben vorgeschlagen oder durch eine Überwachung der Position des Motors bzw. des möglich ist, ein Verschleißverhalten über einen Zeitraum erfasst werden. Über diese Erfassung ist es möglich, ein endgültiges Versagen des Verschleißelements besser vorauszusagen.

In einer weiteren bevorzugten Ausführungsform ist die wenigstens eine Sensoreinrichtung zumindest teilweise in das Verschleißelement und bevorzugt in den Ventilkolben eines Ventils integriert und bevorzugt von diesem zumindest zeitweise und zumindest bereichsweise vollständig umschlossen.

Bevorzugt weist die Sensoreinrichtung ein Metallteil auf, welches zumindest teilweise innerhalb des Ventilkolbens geführt ist. Das Metallteil kann sich bevorzugt bis zu einer Position innerhalb des Ventilkolbens erstrecken, in welcher es in einer Richtung, in welcher durch den Verschleiß des Verschleißelements bzw. des Ventilkolbens Material abgetragen wird, von der verschleißenden Oberfläche beabstandet ist und in welcher das Metallteil im Laufe der Zeit durch den (fortschreitenden) Verschleiß freigelegt wird. Bei dem Metallteil kann es sich um einen Draht handeln.

Das Metallteil kann auf der Verschleißfläche bzw. Kontaktfläche des Ventilkolbens abgewandten Seite oder in Bezug auf eine Bewegungsrichtung des Ventilkolbens seitlichen Seite aus dem Verschleißteil herausragen. Eine Verlängerung des Metallteils kann zu einer weiteren elektrischen Leitung führen, welche mit einem Pol einer Strom- bzw. Spannungsquelle verbunden ist. Hierbei ist es denkbar, dass der eine Pol der Strom- bzw. Spannungsquelle direkt über ein Kabel mit dem Metallteil verbunden ist. Alternativ ist es möglich, dass die Verlängerung des Metallteils über einen Schleifkontakt mit einer metallischen Fläche beispielsweise einer zylindrischen metallischen Ventilinnenwand in Kontakt steht und diese über eine elektrische Leitung mit dem einen Pol der Strom- bzw. Spannungsquelle verbunden ist. Dies bietet den Vorteil, dass keine aufwendige Durchführung einer elektrischen Leitung in Form eines Kabels durch die Wand eines unter Druck stehenden Ventils erforderlich ist.

Das Gegenstück zu dem Metallteil stellt eine metallische Beschichtung bzw. ein metallischer Werkstoff innerhalb der zugeordneten Kontaktfläche der Behältnisbehandlungseinrichtung dar, welche über eine elektrische Leitung mit dem zweiten Pol der Strom- bzw. Spannungsquelle verbunden ist. Weiterhin ist in Analogie zu den oben beschriebenen Ausführungsformen ein Messgerät innerhalb einer der elektrischen Leitungen vorgesehen, welches im Falle eines geschlossenen Stromkreises eine Stromfluss und damit einen Verschleiß des Ventilkolbens registrieren kann.

In einer bevorzugten Ausführungsform kann das Metallteil in einem Ventilkolben geführt sein, welcher zumindest bereichsweise Kunststoff aufweist. In einer bevorzugten Ausführungsform kann das Metallteil in einen Ventilkolben eingespritzt sein. In einer weiteren Ausführungsform kann das Metallteil zumindest bereichsweise in oder auf einen Bereich des Ventilkolbens gedruckt sein, z.B. mit Metall aufweisender Tinte.

Alternativ kann es sich bei dem Metallteil um ein isoliertes Kabel handeln, welches in einem Ventilkolben geführt ist, welcher zumindest bereichsweise aus Metall gefertigt sein kann.

Bevorzugt ist das Metallteil zumindest im Bereich der Kontaktfläche des Ventilkolbens sehr dünn ausgebildet, bevorzugt mit einem Durchmesser oder Wanddicke < 1 mm. Auf diese Weise kann eine Beschädigung der zugeordneten Kontaktfläche der Behältnisbehandlungseinrichtung vermieden werden.

Weiterhin ist es denkbar, dass auch zwei, bevorzugt drei oder bevorzugt mehr als drei Metallteile pro Kolben vorhanden sein. Beispielsweise können die Metallteile in unterschiedlichen Bereichen des Ventilkolbens angeordnet sein um unterschiedliche Arten des Verschleißes oder unterschiedliche Grade des Verschleißes zu überwachen.
In einer weiteren vorteilhaften Ausführungsform weist die wenigstens eine Behältnisbehandlungseinrichtung, bevorzugt eine Blasstation einer Blasformmaschine einen Ventilblock auf, an welchem wenigstens ein Ventil und bevorzugt eine Vielzahl an Ventilen angeordnet ist. Bevorzugt weist der Ventilblock eine Verschleißerkennungseinrichtung und bevorzugt eine Sensoreinrichtung zur Erfassung des Verschleißverhaltens des wenigstens einen Ventils und bevorzugt zur Erfassung des Verschleißverhaltens einer Vielzahl an Ventilen auf.

Bevorzugt entspricht die Verschleißerkennungseinrichtung bzw. die Sensoreinrichtung einer der oben angeführten Ausführungsformen und/oder einer Kombination dieser. Hierbei ist es denkbar, dass jedes Ventil eine eigene vollständige Sensoreinrichtung aufweist, beispielsweise bestehend aus elektrisch leitfähigen Materialien der entsprechenden Fläche, wobei es sich bevorzugt um eine Stufenfläche (des Kopfbereichs) des Ventilkolbens oder bevorzugt um eine Kontaktfläche des Ventilkolbens handelt, bevorzugt eine metallische Beschichtung, einer entsprechenden elektrisch leitfähigen Kontaktfläche der Behältnisbehandlungseinrichtung, insbesondere der Ventilhülse und/oder des Ventilblocks, einer Stromquelle und einem Messgerät zur Erfassung eines Stromflusses.

Weiterhin ist es denkbar, dass sämtliche an dem Ventilblock angeordnete Ventile sich eine gemeinsame Stromquelle und ein Messgerät teilen und die Bereiche mit einem elektrisch leitfähigen Material der Ventilhülsen bzw. die entsprechenden Bereiche des Ventilblocks in Reihe geschaltet sind. Bei einer solchen Anordnung kann das Messgerät erst einen Stromfluss erfassen, wenn alle beteiligten Ventile einen gewissen Grad des Verschleißes erreichtet haben und somit einen Kontakt zwischen den elektrisch leitfähigen Materialien der entsprechenden Flächen der Ventile und der zugeordneten Kontaktflächen der Behältnisbehandlungseinrichtung, insbesondere der Ventilhülse bzw. des Ventilblocks hergestellt wurde. Es wäre jedoch auch eine Parallelschaltung denkbar. In diesem Fall kann ein Stromfluss bereits erfasst werden, wenn eines der beteiligten Ventile einen gewissen Grad an Verschleiß erreicht hat.

Eine solche Anordnung bietet den Vorteil, dass für eine Vielzahl an Ventilen, welche an einem Ventilblock angeordnet sind, nur eine Stromquelle und nur ein Messgerät benötigt werden, wodurch die Kosten und der technische Aufwand deutlich reduziert werden können, insbesondere in Bezug auf anfallende Wartungsarbeiten, da diese zum selben Zeitpunkt für alle Ventile durchgeführt werden können.

In einer alternativen Ausführungsform weist jedes Ventil, welches an einem Ventilblock angeordnet ist, eine eigene vollständige Sensoreinrichtung auf, wodurch jedes Ventil individuell überwacht und entsprechend gewartet werden kann.

In einer weiteren Ausführungsform wäre es denkbar, dass eine Sensoreinrichtung einer Vielzahl von Verschleißelementen, insbesondere Ventilkolben, zugeordnet ist. Beispielsweise wäre es möglich, dass eine berührungslos arbeitende Sensoreinrichtung (z.B. induktiv) stationär im Bereich der Transportvorrichtung angeordnet ist und sich eine Vielzahl von an Behältnisbehandlungseinrichtungen angeordnete Verschleißelemente (Ventilkolben) an ihr vorbei bewegen und so eine Messung vorgenommen werden kann.

In einer weiteren vorteilhaften Ausführungsform weist die Vorrichtung eine Kommunikationseinrichtung zur Übertragung, insbesondere zum Senden und/oder Empfangen von Verschleißdaten in Bezug auf den Verschleiß des wenigstens einen Verschleißelements an eine nicht-flüchtige Speichereinrichtung auf. Bevorzugt ist die Kommunikationseinrichtung dazu geeignet und bestimmt eine Anbindung der Vorrichtung an ein lokales Datennetzwerk (beispielsweise des Betreibers der Anlage) und besonders bevorzugt eine Anbindung an ein übergreifendes Datennetzwerk (beispielsweise des Herstellers der Anlage) zu ermöglichen.

Ein lokales Datennetzwerk kann hierbei ein Datennetzwerk des Betreibers der Anlage sein, beispielsweise zur zentralen Überwachung und Steuerung der Anlage. Ein übergreifendes Datennetzwerk kann hierbei ein Netzwerk des Herstellers der Anlage sein, welches in Verbindung mit den lokalen Datennetzwerken der Betreiber der Anlage(n) steht und bevorzugt erfolgt ein Datenaustausch zwischen den Datennetzwerken des Betreibers und denen des Herstellers.

Bevorzugt ist die Kommunikationseinrichtung Teil der Verschleißerkennungseinrichtung bzw. die Verschleißerkennungseinrichtung Teil der Kommunikationseinrichtung. Bevorzugt ist die Kommunikationseinrichtung dazu geeignet und bestimmt, Daten in Bezug auf das Verschleißverhalten, welche durch die Sensoreinrichtung der Verschleißerkennungseinrichtung erfasst wurden an verschiedene Ebenen eines Fertigungsmanagementsystems zu senden.

Bevorzugt erfolgt in einer ersten Instanz die Übertragung der Daten von der Sensoreinrichtung an eine SPS-Ebene (Speicherprogrammierbare Steuerung) und besonders bevorzugt in einem weiteren Schritt an eine ERP- (Enterprise Resource Planing) und/oder MES-Ebene (Manufacturing Execution System). Bevorzugt umfassen die übertragenen Daten Informationen über das Verschleißverhalten eines Verschleißelements, insbesondere eines Ventils.

Bevorzugt umfassen die übertragenen Daten Informationen in Bezug auf die Art des Verschleißelements (Ventils), bevorzugt eine Seriennummer, eine Modellnummer und dergleichen, Informationen in Bezug auf die Drücke, mit welchen die Verschleißelemente (Ventile) geschalten wurden (Drücke der Vorsteuerventile), Informationen in Bezug auf die Betriebsstunden, Informationen in Bezug auf das verwendete fließfähige Medium, beispielsweise ob es sich um Druckluft, Desinfektionsgas oder dergleichen handelt oder Informationen in Bezug auf die Konzentration des Desinfektionsgases, die Art des Desinfektionsgases, die Häufigkeit der Verwendung (Sterilisationszyklen), Anzahl von Schaltzyklen, Kraft auf das Verschleißelement, Endpositionen des Verschleißelements - insbesondere über einen Zeitraum. Weiterhin ist es denkbar, dass die übertragenen Daten Informationen auf äußere Bedingungen der Anlage umfassen, beispielsweise in Bezug auf die Umgebungstemperatur, den Umgebungsdruck, Umgebungsluftfeuchtigkeit und dergleichen.

Bevorzugt werden die erfassten Daten an einen nicht-flüchtigen Speicher, insbesondere an eine zentrale Datenbank, beispielsweise des Herstellers, übertragen, beispielsweise über das Internet an eine Cloud oder einen externen Server. Bevorzugt werden Daten von einer Vielzahl an Anlagen von einer Vielzahl von Betreibern (einer Anlage) übermittelt und zentral (durch den Hersteller) überwacht und/oder ausgewertet. Dies bietet den Vorteil, dass aus der Fülle der erhaltenen Daten Rückschlüsse auf das Verschleißverhalten eines Verschleißelements in Abhängigkeit von einer Vielzahl an Einflussfaktoren, wie dem Druck mit denen ein Ventil geschalten wird, das verwendete fließfähige Medium, der Druck desselben, die Zusammensetzung des fließfähigen Mediums (beispielsweise Desinfektionsgas), die Betriebsstunden, die Schaltzyklen und dergleichen möglich sind. So kann beispielsweise anhand der ausgewerteten Daten ein Betreiber einer Anlage, dessen Anlage keine eigene Verschleißerkennungseinrichtung aufweist, vorgewarnt werden, dass beispielsweise auf Basis der Betriebsstunden seiner Anlage oder der Zahl der Sterilisationszyklen ein baldiger Ventilausfall droht. Beispielsweise ist es auch möglich, die Erkenntnisse aus der Auswertung der Daten direkt in die Maschensteuerung der jeweiligen Anlagen zu übertragen, wodurch beispielsweise automatisch rechtzeitig Materialien (Ventile) in Hinblick auf den nächsten Verschleißzeitpunkt bestellt werden können.

Wird beispielsweise ein Lieferant für Materialen des Verschleißelements gewechselt, beispielsweise ein Lieferant für Dichtmaterial, so können auf diesem Weg übergreifend über alle Anlagen, welche mit einer Verschleißerkennungseinrichtung ausgestattet sind, schnell die Eigenschaften des neuen Materials in Bezug auf dessen Verschleißverhalten ermittelt werden und mit allen Betreibern solcher Anlagen geteilt werden.

Weiterhin ist es möglich die erfassten und ausgewerteten Daten einer Anlage und/oder einer Vielzahl von Anlagen für die Steuerung einer Anlage und/oder einer Vielzahl von Anlagen zu benutzen. Beispielsweise hat ein Ventil ein Grad des Verschleißes erreicht, an dem es ausgetauscht werden sollte, wird der Betreiber der Anlage darüber informiert. Tritt beispielsweise der Fall ein, dass dieses Ventil das einzige auszutauschende Ventil ist und entsprechende Wartungsarbeiten unverhältnismäßig aufwendig wären (z.B. Anhalten der kompletten Anlage), kann der Betreiber der Anlage stattdessen das entsprechende Ventil stilllegen bzw. dauerhaft geschlossen halten und beispielsweise bis zur nächsten planmäßigen Wartung zu warten. Bei einer vorteilhaften Ausführungsform ist das wenigstens ein Verschleißelement, insbesondere ein Ventil, in Abhängigkeit von dem erfassten Verschleißverhalten steuerbar, insbesondere ein- und/oder ausschaltbar.

Dies bietet den Vorteil, dass die Anlage auch mit einem verschlissenen Ventil weiter betrieben werden kann.

Weiterhin ist die vorliegende Erfindung auf eine Vorrichtung zum Behandeln von Behältnissen mit einer Transportvorrichtung zum Transport eines Behältnisses entlang eines vorgegebenen Transportpfads gerichtet. Die Vorrichtung weist wenigstens eine Behältnisbehandlungseinrichtung und bevorzugt eine Vielzahl von Behältnisbehandlungseinrichtungen auf, wobei die wenigstens eine Behältnisbehandlungseinrichtung wenigstens zwei Ventile aufweist, über welche ein fließfähiges Medium einem Behältnis zuführbar und/oder von dem Behältnis abführbar ist.

Erfindungsgemäß ist die wenigstens eine Behältnisbehandlungseinrichtung in einem ersten und in einem zweiten Betriebsmodus betreibbar, wobei in einem ersten Betriebsmodus wenigstens ein Ventil aktiv ist und wenigstens ein Ventil nicht aktiv ist und in einem zweiten Betriebsmodus alle Ventile aktiv sind. Die Vorrichtung weist eine Verschleißerkennungseinrichtung zur Erfassung von Verschleißdaten in Bezug auf einen Verschleiß eines der wenigstens zwei Ventile auf.

Bevorzugt weist die wenigstens eine Behältnisbehandlungseinrichtung mehrere Ventile auf, welche baugleich sind und/oder für die gleiche Aufgabe eingesetzt werden können. Dies bietet den Vorteil, dass im Falle eines verschlissenen Ventils (Überwachung durch die Verschleißerkennungseinrichtung) dieses deaktiviert (stillgelegt) werden kann und nicht sofort ausgetauscht werden muss. In der Zwischenzeit kann ein anderes Ventil dessen Aufgabe übernehmen. Bei einer vorteilhaften Ausführungsform ist wenigstens ein Ventil und bevorzugt alle Ventile in Abhängigkeit von den erfassten Verschleißdaten aktivierbar und/oder deaktivierbar. Hierbei kann es bereits anlagenseitig vorgesehen sein, dass ein Ventil für verschiedene Aufgaben eingesetzt wird und die entsprechende Infrastruktur eingerichtet ist (beispielsweise Vorhandensein zusätzlicher Leitungen, welche im Normalzustand außer Betrieb sind). Dies bietet den Vorteil, dass im Rahmen der Anlagensteuerung automatisch bei Erkennen eines verschlissenen Ventils dieses deaktiviert werden kann und auf einen alternativen Betriebsmodus eines Ventils, welches dessen Aufgaben übernehmen soll, gewechselt werden kann. Bevorzugt ist die Behältnisbehandlungseinrichtung hierzu in verschiedenen Betriebsmodi betreibbar. Für weitere Erläuterungen sei auf die nachfolgende Beschreibung des erfindungsgemäßen Verfahrens verwiesen. Ebenso ist es denkbar, dass die Behältnisbehandlungseinrichtung zusätzliche Anschlüsse und/oder Leitungen aufweist, die von einem Bediener der Anlage im Falle eines verschlissenen Ventils verwendet werden können, um die Anlage entsprechend an die Situation anzupassen.

Bei einer vorteilhaften Ausführungsform weist die wenigstens eine Behältnisbehandlungseinrichtung wenigstens drei, bevorzugt wenigstens vier und besonders bevorzugt eine Vielzahl von Ventilen und insbesondere einen Ventilblock auf, an welchem die wenigstens zwei, bevorzugt wenigstens drei und besonders bevorzugt die Vielzahl von Ventilen angeordnet sind.

Weiterhin ist die vorliegende Erfindung gerichtet auf ein Verfahren zum Behandeln von Behältnissen mit einer Transportvorrichtung, welche ein Behältnis entlang eines vorgegebenen Transportpfads transportiert und wenigstens eine Behältnisbehandlungseinrichtung und bevorzugt eine Vielzahl von Behältnisbehandlungseinrichtungen aufweist. Die wenigstens eine Behältnisbehandlungseinrichtung weist wenigstens ein Verschleißelement auf, wobei die wenigstens eine Behältnisbehandlungseinrichtung eine Verschleißerkennungseinrichtung zur Erfassung von Verschleißdaten in Bezug auf einen Verschleiß des wenigstens einen Verschleißelements aufweist. Die Verschleißerkennungseinrichtung weist eine Sensoreinrichtung auf. Es ist weiterhin eine Kommunikationseinrichtung vorgesehen zur Übertragung von Verschleißdaten in Bezug auf einen Verschleiß des wenigstens einen Verschleißelements.

Erfindungsgemäß erfasst die Sensoreinrichtung die Verschleißdaten in Bezug auf einen Verschleiß des wenigstens einen Verschleißelements direkt.

Dies bietet im Gegensatz zu den aus dem Stand der Technik bekannten Verfahren den Vorteil, dass eine Überwachung des Verschleißzustands eines Verschleißteils genau und unmittelbar erfolgt und nicht indirekt. Dadurch ist es möglich, das Verschleißverhalten genauer zu überwachen, was eine Verbesserung in Hinblick auf den technischen und finanziellen Aufwand im Rahmen der Wartung einer Anlage mit sich bringt.

Es wird auch verfahrensseitig vorgeschlagen die erfassten Verschleißdaten über die Kommunikationseinrichtung zu übertragen und zur Steuerung der eigenen Anlage zu verwenden, aber auch für die Steuerung bzw. Wartung anderer Anlagen, beispielsweise durch den Hersteller. Die sich hieraus ergebenden Vorteile wurden bereits bei der Betrachtung der erfindungsgemäßen Vorrichtung beschrieben.

Bei einem vorteilhaften Verfahren handelt es sich bei dem wenigstens einen Verschleißelement um einen Ventilkolben eines Ventils zur Zu- und/oder Abführung eines fließfähigen Mediums. Bevorzugt ist das wenigstens ein Ventil in Abhängigkeit von den erfassten Verschleißdaten aktivierbar und/oder deaktivierbar.

Weiterhin ist die vorliegende Erfindung gerichtet auf ein Verfahren zum Behandeln von Behältnissen mit einer Transportvorrichtung, welche ein Behältnis entlang eines vorgegebenen Transportpfads transportiert, wobei wenigstens eine Behältnisbehandlungseinrichtung und bevorzugt eine Vielzahl von Behältnisbehandlungseinrichtungen vorgesehen ist. Die wenigstens eine Behältnisbehandlungseinrichtung weist wenigstens zwei Ventile auf, um einem Behältnis ein fließfähiges Medium zuzuführen und/oder von diesem abzuführen.

Erfindungsgemäß ist die wenigstens eine Behältnisbehandlungseinrichtung in einem ersten Betriebsmodus betreibbar, in welchem wenigstens ein Ventil deaktiviert ist und wenigstens ein Ventil aktiviert ist und/oder in einem zweiten Betriebsmodus betreibbar ist, in welchem alle Ventile aktiviert sind.

Dies bietet den Vorteil, dass bei Erkennung eines verschlissenen Ventils die Anlage nicht sofort gestoppt und das Ventil ausgewechselt werden muss, sondern die Anlage beispielsweise bis zur nächsten planmäßigen Wartung weiterbetrieben werden kann. Bevorzugt erfolgt eine Aktivierung bzw. Deaktivierung eines Ventils auf Grundlage der erfassten Verschleißdaten automatisch. Weiterhin ist es denkbar, dass die Anlagensteuerung den Betreiber der Anlage informiert, dass ein Ventil auf Grundlage der erfassten Verschleißdaten abgeschaltet werden soll und der Betreiber dies bestätigen muss. Weiterhin ist es denkbar, dass die Anlagensteuerung den Betreiber der Anlage informiert, dass ein Ventil deaktiviert werden soll und dies händisch durch den Betreiber der Anlage vorgenommen werden muss.

Bevorzugt kann die Behältnisbehandlungseinrichtung ein einem ersten Betriebsmodus betrieben werden. Bevorzugt ist in einem solchen ersten Betriebsmodus wenigstens ein Ventil deaktiviert und wenigstens ein Ventil aktiviert. Weiterhin ist denkbar, dass bei einer Vielzahl von Ventilen auch mehr als ein Ventil deaktiviert vorliegen bzw. werden kann. Bevorzugt ist die Anlage in einem zweiten Betriebsmodus betreibbar, in welchem alle Ventile aktiviert vorliegen bzw. sind. Dies entspricht dem normalen Betriebsmodus.

Unter einem aktiven bzw. aktivierten Ventil wird in diesem Zusammenhang ein Ventil verstanden, welches durch die Maschinensteuerung im Rahmen seiner vorgesehenen Funktionen angesteuert und/oder geschaltet werden kann. Unter einem deaktivierten Ventil wird in diesem Zusammenhang ein Ventil verstanden, welches nicht angesteuert und/oder geschaltet werden kann und/oder nicht angesteuert bzw. geschalten wird. Bei der Deaktivierung eines Ventils wird das Ventil in eine geschlossene Stellung überführt und (dauerhaft) in einer geschlossenen Stellung gehalten, damit es im Rahmen der auszuführenden Prozesse der Behältnisbehandlungseinrichtung nicht mehr (unbeabsichtigt) geschaltet werden kann.

Ein aktives Ventil wird bevorzugt pro Umdrehung der Transportvorrichtung, z.B. eines Blasrades, mindestens einmal geschalten.

Die Verwendung solcher verschiedener Betriebsmodi sei anhand einer Behältnisbehandlungseinrichtung in Form einer Blasformmaschine, genauer gesagt einer Blasformstation beschrieben. Die Blasformmaschine umfasst eine Blasstation, welche über mehrere Ventile mit verschiedenen Druckspeichern verbunden ist. Innerhalb der Druckspeicher liegen verschiedene Druckniveaus je nach auszuführendem Schritt vor (Vorblasen, Zwischenblasen, Fertigblasen). Bei einem normalen Betrieb (zweiter Betriebsmodus) wird ein innerhalb der Blasform angeordneter Kunststoffvorformling zunächst mit dem niedrigsten Druck (Vorblasen) beaufschlagt, dann mit dem mittleren (Zwischenblasen) und zuletzt mit dem höchsten Druck (Fertigblasen) beaufschlagt. Anschließend wird die unter dem höchsten Druck stehende Blasform mit dem mittleren Druckspeicher verbunden, um so die Druckluft in diesen zu recyclen. In einem weiteren Schritt erfolgt ein Recycling in den Druckspeicher mit dem niedrigsten Druck.

Der Begriff "Druckspeicher" umfasst dabei sowohl Druckluftbehälter (z.B. Tanks) als auch lediglich Rohre oder Schläuche, welche fließfähiges Medium befördern (z.B. Verteiler). Insbesondere umfasst sind damit auch Ringkanäle zur Verteilung von dem fließfähigen Medium zu einzelnen Stationen.

Insbesondere kann das Verschleißelement während des Betriebs ständig und/oder lediglich eine alternierende Bewegung entlang einer Achse durchführen.

Ist nun beispielsweise das Ventil, welches die Blasform mit dem mittleren Druckspeicher verbindet, verschlissen und muss deaktiviert werden, so kann die Anlage dennoch weiter betrieben werden, da auf ein Zwischenblasen verzichtet werden kann. Ist beispielsweise das Ventil der niedrigsten Druckstufe deaktiviert, so kann die Anlage ebenfalls weiter betrieben werden und auf einen Recyclingschritt verzichtet werden. Das Entlassen des Restdrucks aus der Blasform kann dann beispielsweise durch Anheben der Blasform erfolgen.

Bei einer vorteilhaften Ausführungsform handelt es sich in einem ersten Betriebsmodus bei dem wenigstens einen deaktivierten Ventil um ein Recyclingventil. Bei einer vorteilhaften Ausführungsform des erfindungsgemäßen Verfahrens ist ein Wechsel zwischen dem ersten Betriebsmodus und dem zweiten Betriebsmodus ohne ein Anhalten der wenigstens einen Behältnisbehandlungseinrichtung durchführbar und/oder wird entsprechend durchgeführt.

Weitere Vorteile und Ausführungsformen ergeben sich aus den beigefügten Zeichnungen. Darin zeigen:
- Fig. 1: eine Vorrichtung zum Behandeln von Behältnissen;
- Fig. 2: ein nicht verschlissenes Ventil im geöffneten Zustand gemäß einer Ausführungsform der vorliegenden Erfindung;
- Fig. 3: ein nicht verschlissenes Ventil im geschlossenen Zustand gemäß einer Ausführungsform der vorliegenden Erfindung;
- Fig. 4: ein verschlissenes Ventil im geschlossenen Zustand gemäß einer Ausführungsform der vorliegenden Erfindung;
- Fig. 5: ein nicht verschlissenes Ventil im offenen Zustand gemäß einer weiteren Ausführungsform der vorliegenden Erfindung;
- Fig. 6: ein nicht verschlissenes Ventil im offenen Zustand gemäß weiteren Ausführungsform der vorliegenden Erfindung;
- Fig. 7: Ventilanordnung an einem Ventilblock gemäß einer Ausführungsform der vorliegenden Erfindung;
- Fig. 8: eine Anbindung einer Ausführungsform der vorliegenden Erfindung an ein Netzwerk;
- Fig 9: ein verschlissenes Ventil im geschlossenen Zustand gemäß einer weiteren Ausführungsform der vorliegenden Erfindung;
- Fig. 10: eine schematische Darstellung einer Blasstation und Schritte eines Blasvorgangs in einem zweiten Betriebsmodus;
- Fig. 11: eine schematische Darstellung einer Blasstation und Schritte eines Blasvorgangs in einem ersten Betriebsmodus;
- Fig. 12: eine schematische Darstellung einer Blasstation mit fünf Ventilen.

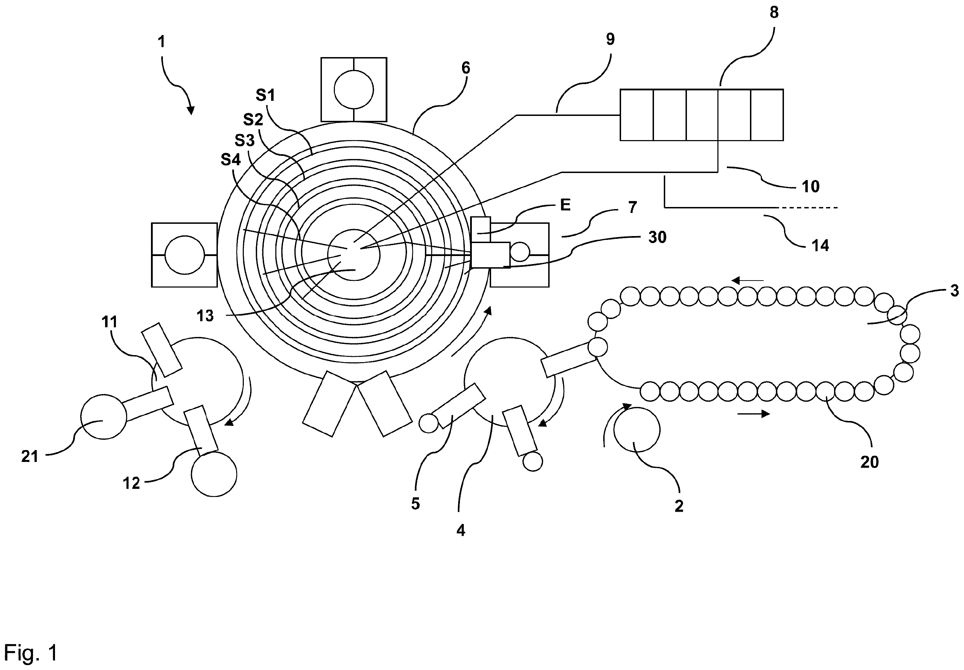

Figur 1 zeigt eine schematische Draufsicht einer Vorrichtung 1 zum Behandeln von Behältnissen in Form einer Blasformmaschine. In diesem Ausführungsbeispiel ist sie als kontinuierlich arbeitende Streckblasmaschine ausgeführt. Vorformlinge 20 werden über einen sogenannten Sägezahnstern 2 einer Vorrichtung zur Temperierung 3 zugeführt, in der die Vorformlinge 20 mittels auf einer umlaufenden Kette angeordneten Heizdornen durch einen nicht näher dargestellten Heiztunnel, bestehend aus einer Vielzahl von Infrarotheizstrahlern und bevorzugt gegenüberliegenden Reflektoren, kontinuierlich durchgeführt werden. Bei der Vorrichtung zum Temperieren 3 kann es sich alternativ um einen Rundläufer handeln, an dessen Umfang eine Vielzahl von Erwärmungsstationen wie Mikrowellenresonatoren oder Heiztaschen angebracht sind (nicht gezeigt).

Nach der Temperierung werden die Vorformlinge 20 von Greifern 5, welche auf einem Einlaufstern 4 umlaufen, an ein Blasrad 6 übergeben, auf dessen Umfang eine Vielzahl von Blasstationen 7 angeordnet ist. Nach dem Formgebungsprozess in der Blasstation 7 werden die fertig geblasenen Flaschen 21 von einem Entnahmestern 11 entnommen. Anschließend erfolgt ein Transport der Flaschen 21 zu einer nicht gezeigten Etikettierung oder einem anderen Aggregat wie einer Fülleinrichtung oder einer Sterilisationseinrichtung. Die Transportwege der Vorformlinge 20 und der Flaschen 21 sind jeweils mit Pfeilen angedeutet.

Die einzelnen Blasstationen 7 werden über einen Kompressor (ggfs. mit mehreren Kompressorstufen 8), mit einem gasförmigen Medium, hier Druckluft, versorgt. In der ersten Stufe (rechts dargestellt) wird Luft auf einen Druck von beispielsweise 5 bar komprimiert, in der nächsten Stufe auf 10 bar und so weiter, bis sie nach der Endstufe einen Druck von 45 bar aufweist. Sodann wird die Luft über eine Zuführleitung 9 einem Drehverteiler 13 zugeführt, welcher den stationären Teil der Blasformmaschine mit dem drehenden Teil (Blasrad 6) verbindet.

Auf dem Drehverteiler 13 oder dem Blasrad 6 sitzen ebenfalls mehrere nicht dargestellte Druckminderer, welche den vom Kompressor bereitgestellten Druck auf unterschiedliche Druckniveaus für ebenfalls auf dem Blasrad 6 angebrachte Druckspeicher S1 bis S3, welche als Ringleitungen ausgeführt sind, reduzieren. Die Ringleitungen dienen als Druckspeicher S1 bis S3 bzw. -verteiler für die einzelnen Blasstationen 7 auf dem Blasrad 6.

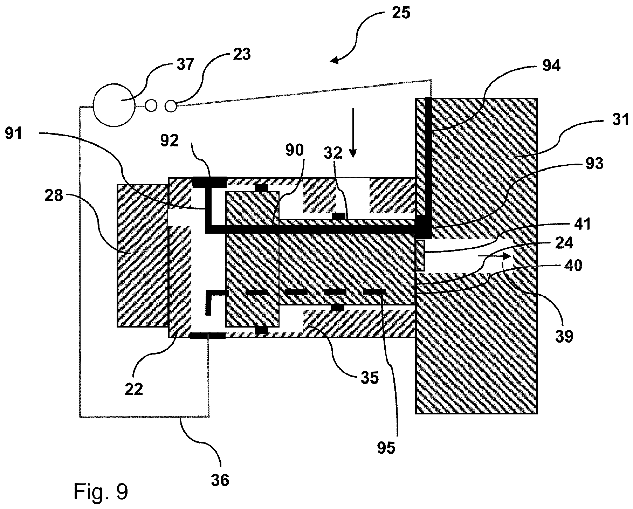

Im Druckspeicher S3 wird ein Vorblasdruck von beispielsweise 10 bar bereitgestellt, im Druckspeicher S2 ein Zwischenblasdruck von beispielsweise 20 bar und im Druckspeicher S1 ein Fertigblasdruck von beispielsweise 35 bar. Jede Blasstation 6 umfasst dabei eine Ventileinheit 30, welche mit den einzelnen Druckspeichern S1 bis S3 verbunden ist und welche die einzelnen Druckspeicher S1 bis S3 mit dem aufzublasenden Vorformling 20 verbindet. Nach dem Abdichten des Vorformlings 20 mittels einer Blasdüse 47 (vgl. Figur 9) wird dieser nacheinander und in folgender Reihenfolge mit den einzelnen Druckspeichern verbunden: S3, S2, S1. Nach dem fertigen Expandieren wird die Luft aus der Flasche 21 - immer noch unter dem Fertigblasdruck stehend - zuerst wieder in den Druckspeicher S2 zurückgeführt, vorteilhafterweise so lang, bis der Druck in der Flasche 21 annähernd den Druck im Druckspeicher S2 erreicht hat. Anschließend wird die Luft in der Flasche 21 - jetzt annähernd unter dem Druck des Druckspeichers S2 stehend - dem Druckspeicher S3 zugeführt.

Es kann auch vorteilhaft sein, zuerst den Druckspeicher S3 (Vorblaskanal) für eine Rückführung der Luft zu nutzen, wenn sichergestellt werden soll, dass in diesem immer ein Mindestdruck bereitgestellt werden soll. Auch kann die Rückführzeit über den Druck in einem Druckspeicher S2, S3, S4 mittels eines nicht dargestellten Drucksensors geregelt werden. Auf die Druckminderer, welche den Druck für die Druckspeicher S2 und S3 zur Verfügung stellen, könnte während der Produktion auch verzichtet werden, wenn genügend Luft recycelt wird, für ein Anfahren der Blasmaschine sind sie jedoch von Vorteil.

Anstatt nun die verbleibende Luft über einen Auslass E an die Atmosphäre entweichen zu lassen, wird die Blasluft anschließend nochmals bis zu einem Niveau von 3-5 bar in den Druckspeicher S4 zurückgespeist. Da das Vorblasen aus Druckspeicher S3 unter einem gewissen Druck von hier 10 bar den ersten Schritt in der Herstellung der Kunststoffflasche darstellen muss, dient der Druckspeicher S4 aufgrund seines niedrigeren Druckniveaus in diesem Ausführungsbeispiel ausschließlich der (Zwischen-)Speicherung oder Weiterleitung von rückgeführter Blasluft aus der Flasche 21 und nicht zum Blasen.

Von dort aus kann die Luft entweder noch auf dem Blasrad 6, beispielsweise Vorsteuerventilen oder anderen Antrieben der Blasstationen (z. B. einem Antrieb für Reckstangen), zur Verfügung gestellt werden, oder über eine weitere Leitung und durch den Drehverteiler 13 zurück in den stationären Teil der Maschine über Leitung 10 überführt werden. Von dort kann die Luft beispielsweise in eine Zwischenstufe des Kompressors 8 zurückgespeist oder über eine Leitung 14 dem Hallendruckluftnetz oder anderen Verwendungen wie einer Flaschenbodennachkühlung oder einer Etikettier- oder Füllmaschine zugeführt werden.

Die Druckspeicher S1, S2, S3, S4 können auch nur bereichsweise ringförmig ausgebildet sein. Beispielsweise kann ein Druckspeicher S1, S2, S3, S4 auch durch zwei halbkreisförmige Hälften gebildet werden.

Der bereits erwähnte Auslass E ist an jeder Station 7 vorhanden und dient dem Auslass der verbleibenden 3-5 bar in der Flasche 21, bevor die Blasdüse 47 wieder hochgefahren und die Flasche F entnommen wird.

Bevorzugt sind den einzelnen Blasstationen auch jeweils Reckstangen zugeordnet, welche in das Innere der Kunststoffvorformlinge einführbar sind, um diese in ihrer Längsrichtung zu dehnen. Dabei kann eine Steuerungseinrichtung die Bewegung dieser Reckstangen ebenfalls in Abstimmung mit der Druckbeaufschlagung der Kunststoffvorformlinge steuern.

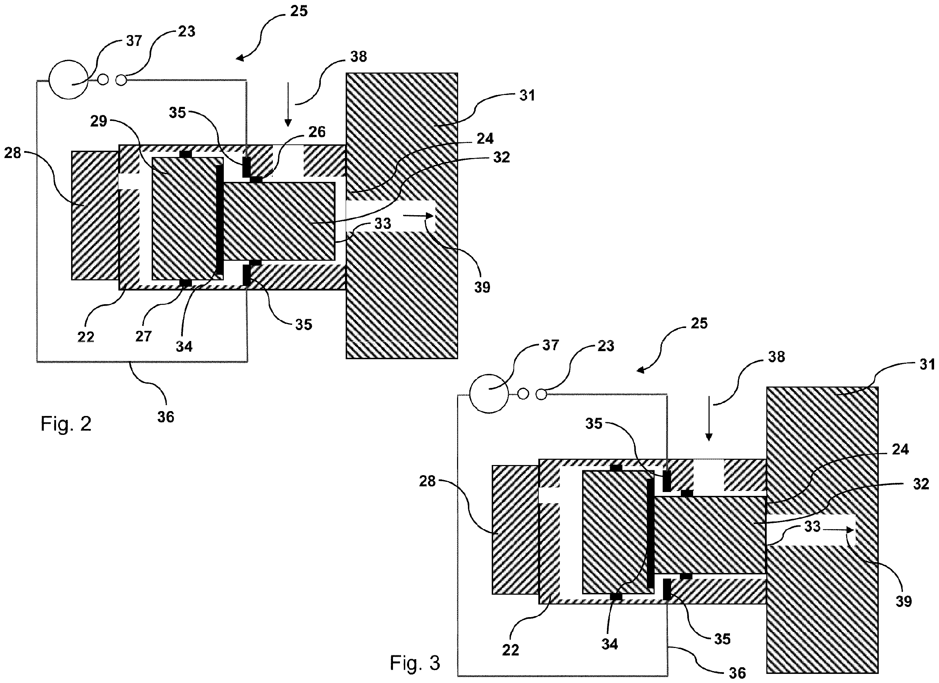

Figur 2 zeigt eine Ventilanordnung 25 mit einem nicht verschlissenen Ventil in einem offenen Zustand, welches an einem Ventilblock 31 einer Blasstation angeordnet ist. Dieses Ventil dient der Zu- oder Ableitung eines fließfähigen Mediums, hier Druckluft. Hier gezeigt ist eine Ventilanordnung 25 während eines Blasvorgangs, wobei der Weg der Druckluft von einem Druckspeicher (Zuleitung 38) durch das Ventil zu der Blasform (Zuleitung 39) durch Pfeile angezeigt ist. Ein Vorsteuerventil 28 dient der Steuerung der Hubbewegung des Ventilkolbens 32. Der Ventilkolben 32 weist einen Kopfbereich 29 auf, welcher von einer Dichtung 27 über den gesamten Umfang umgeben ist zur Abdichtung zwischen dem Vorsteuerventil 28 und der Ventilanordnung 25. Der Ventilkolben weist ebenfalls eine Dichtung 26 auf, welche über den vollen Umfang des Ventilkolbens zwischen diesem und der Ventilhülse 22 abdichtet. Weiterhin weist der Ventilkolben 32 eine Kontaktfläche 33 auf, mit welcher der Ventilkolben 32 mit einer komplementären Kontaktfläche 24 des Ventilblock 31 im geschlossenen Zustand des Ventils aneinander anliegen.

In der hier dargestellten Ausführungsform der erfindungsgemäßen Verschleißerkennungseinrichtung weist diese eine metallische Kontaktfläche der Ventilhülse 22, eine metallische Kontaktfläche 34 an der Unterseite des Kopfbereichs 34 des Ventilkolbens 32, eine Stromquelle 23, ein Messgerät 37 und eine elektrische Leitung 36 auf. Die Kontaktfläche 34 steht in diesem Beispiel in einem Winkel von >1° und kleiner 179°, bevorzugt aber senkrecht auf einen Vektor der Bewegungsrichtung des Ventilkolbens.

An dieser Stelle sei darauf hingewiesen, dass die metallische Kontaktflächen, welche jeweils mit dem Bezugszeichen 35 bezeichnet sind, nicht miteinander in elektrisch leitfähigem Kontakt stehen, sondern auf zwei in Bezug auf den Ventilkolben 32 gegenüber liegenden Seiten angeordnet sind. Die metallische Kontaktflächen 35 verlaufen nicht entlang des Umfangs, sondern befinden sich bevorzugt nur an zwei Positionen entlang des Umfangs, hier gezeigt: an zwei gegenüberliegenden Seiten. Die metallische Kontaktfläche 34 auf der Unterseite ist z.B. kreisförmig ausgebildet und umfasst zumindest teilweise den Umfang, bevorzugt den vollen Umfang des Ventilkolbens, sodass im Falle eines Kontaktes mit den metallischen Kontaktflächen 35 ein Stromkreis geschlossen wird und ein Stromfluss durch das Messgerät 37 erfasst werden kann.

Figur 3 zeigt die Ventilanordnung 25 der Figur 2 in einem geschlossenen Zustand. Man erkennt gut, dass die Kontaktfläche 33 des Ventilkolbens 32 vollflächig auf der komplementären Kontaktfläche 24 des Ventilblocks 31 aufliegt und damit das Ventil gasdicht abgeschlossen ist. Bei einem nicht verschlissenen Ventil ist die Kontaktfläche 33 des Ventilkolbens 32 völlig eben und liegt in einem geschlossenen Zustand des Ventils flächig auf der Kontaktfläche 24 des Ventilblocks 31 auf. In diesem Zustand sind die metallischen Kontaktflächen 34 und 35 voneinander beabstandet und es wird der Stromkreis nicht geschlossen, weswegen das Messgerät 37 auch keinen Stromfluss detektieren kann.

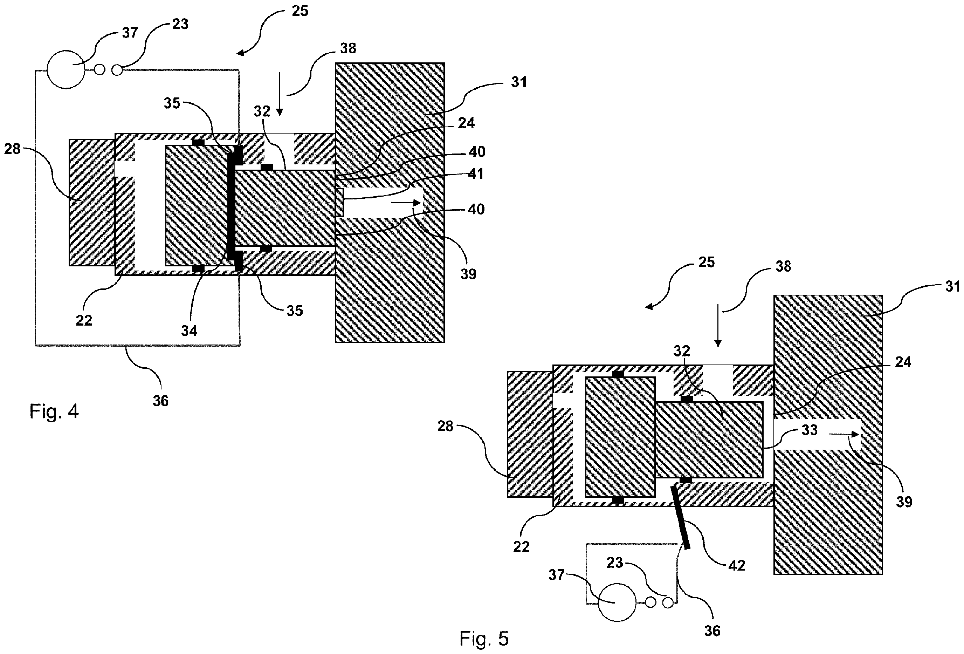

Figur 4 zeigt einen Zustand der Ventilanordnung 25 der Figuren 2 und 3 bei der der Verschleiß der Kontaktfläche 33 des Ventilkolbens 32 weiter fortgeschritten ist und dieser statt einer ebenen Kontaktfläche 33 einen tieferliegenden verschlissenen Bereich 40 aufweist, welcher mit der Kontaktfläche 24 des Ventilblock 31 und einem höherliegenden nicht verschlissenen Bereich 41 aufweist, welcher ein Stück in den Kanal zur Blasform hineinragt. Da der Ventilkolben 32 in einem geschlossenen Zustand des Ventils einen weiteren Weg zurückgelegt hat, sind sich der Kopfbereich 29 des Ventilkolbens 32, genauer gesagt die metallische Kontaktfläche 34 und die metallischen Kontaktflächen 35 näher gekommen, sodass diese sich nun kontaktieren und ein Stromkreis geschlossen wird. Das Messgerät 37 registriert einen Stromfluss und kann somit ein Signal ausgeben, dass der Ventilkolben 32 einen gewissen Grad des Verschleißes erreicht hat und ausgewechselt werden muss. Dies bietet den Vorteil, dass der Verschleiß der Ventilkolbens 32 automatisch erkannt werden kann, ohne ein manuelles Ausbauen des Ventils durch den Bediener der Anlage.

Figur 5 zeigt eine weitere Ausführungsform der vorliegenden Erfindung. Anstelle von metallischen Kontakten 35 an der Ventilhülse 22 und einer metallischen Kontaktfläche 34 auf der Unterseite des Kopfbereichs 29 zum Schließen eines Stromkreises ist ein metallischer Kippschalter 42 an einer Position angeordnet, auf welche der Kopfbereich 29 des Ventilkolbens 32 im Falle eines verschlissenen Ventilkolbens 32 trifft. Hierdurch wird der metallische Kippschalter 42 etwas bewegt und schließt einen Stromkreis und der Stromfluss kann wiederum von einem Messgerät 37 registriert werden.

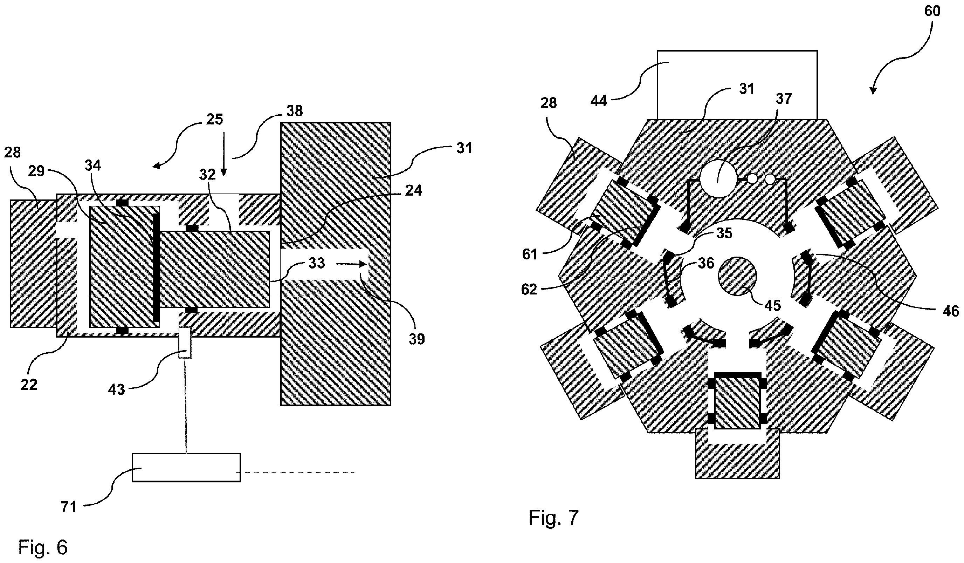

Figur 6 zeigt eine weitere Ausführungsform der vorliegenden Erfindung. Anstelle eines metallischen Kippschalters 42 zum Schließen eines elektrischen Stromkreises und dem Erfassen eines Stromflusses durch das Messgerät 37 (wie in Figur 5) zeigt die Ausführungsform der Figur 6 einen Induktionssensor 43, welcher einen Abstand zwischen dem Induktionssensor 43 und dem Kopfbereich 29 des Ventilkolbens 32 erfassen kann. Die Daten des Induktionssensors 43 können manuell oder auch kontinuierlich ausgelesen werden und direkt in ein Datennetzwerk zur Überwachung und/oder Steuerung der Anlage(n) eingespeist werden, beispielsweise an eine MES- und/oder ERP-Ebene (Manufacturing Execution System/ Enterprise Resource Planing) 71 eines Fertigungsmanagementsystems.

Figur 7 zeigt in einer Ausführungsform der vorliegenden Erfindung eine Ventilanordnung 60, bei der ein Ventilblock 31 an einer Ventilblockhalterung 44 angeordnet ist. Die Ventilblockhalterung 44 entspricht einem stationären Träger, welcher sich in Bezug auf die Blasform oberhalb befindet und sich während der Rotationbewegung des Blasrades mit der Blasform mitbewegt. Gezeigt ist eine Anordnung von fünf Ventilen, welche vereinfacht durch fünf Ventilkolben 61 dargestellt sind, welche jeweils ein Vorsteuersteuerventil 28 aufweisen zur Steuerung der Bewegung des Ventilkolbens 61. Die fünf Ventilkolben 61 sind um eine zentrale Öffnung angeordnet, in deren Mitte sich die Reckstange 45 befindet. In Anlehnung an die Ausführungsformen, welche in den Figuren 2 bis 4 gezeigt sind, weisen die Ventilkolben 61 eine metallische Kontaktfläche 62 auf, deren Gegenspieler die metallischen Kontaktflächen 35 des Ventilblocks 31 sind. Im Unterschied zu den vorherigen gezeigten Ausführungsformen sind hier die metallischen Kontaktflächen 35 mit einer Kunststoffdichtfläche 46 versehen, welche mit der Zeit langsam verschleißen und die metallische Kontaktfläche 35 freigeben. In diesen Zustand wird durch den Kontakt der metallischen Kontaktflächen 35 und metallische Kontaktfläche 62 ein Stromkreis geschlossen. In der hier gezeigten Ausführungsform sind jeweils die zueinander benachbarten metallischen Kontaktflächen 35 über eine elektrische Leitung 36 miteinander verbunden und zusammen mit einem Messgerät 37 zur Erfassung eines Stromflusses in Reihe geschaltet. In dieser Ausführungsform wird ein Stromfluss erst registriert, sobald alle fünf Ventile soweit verschlissen sind, dass sämtliche Kunststoffdichtflächen 46 soweit abgenutzt sind, dass die darunter befindlichen metallischen Kontakte 35 freigelegt sind. In einer alternativen Ausführungsform (nicht gezeigt) ist es möglich anstelle der Reihenschaltung der metallischen Kontaktflächen 35 eine Sternschaltung (Parallelschaltung) der entsprechenden metallischen Kontaktflächen 35 vorzunehmen, wodurch der Verschleiß eines jeden Ventils individuell erfasst werden kann.

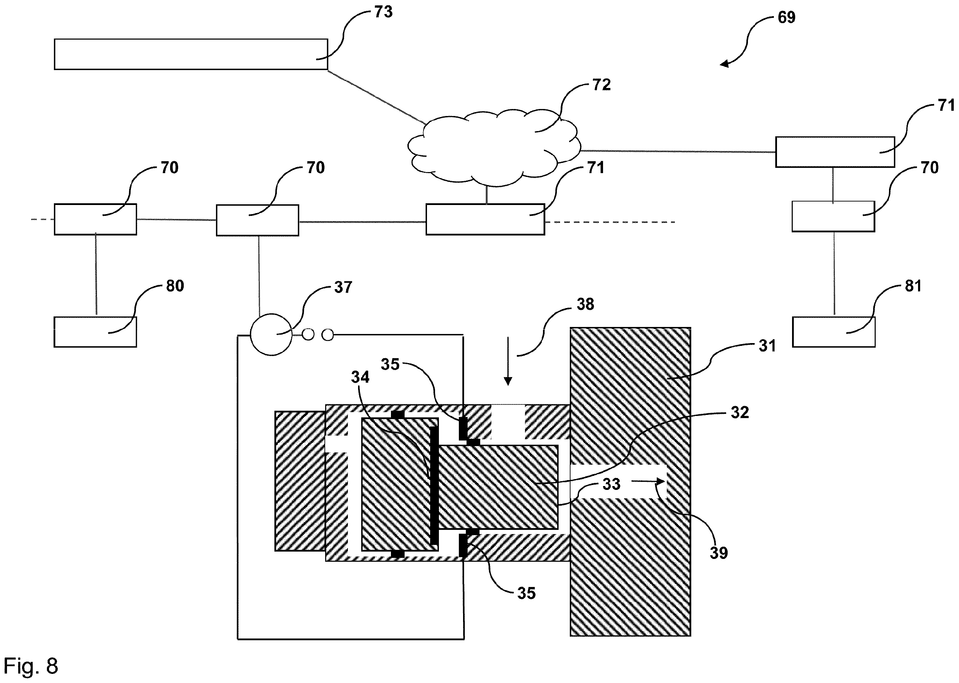

Figur 8 zeigt die Anbindung einer Ausführungsform an ein Fertigungsmanagementsystem 69. Eine solche Anbindung gilt für alle gezeigten Ausführungsformen und ist hier zwecks der Übersichtlichkeit nur für die in den Figuren 2 bis 4 dargestellten Ausführungsform gezeigt. Die von einem Messgerät 37 erfassten Daten in Bezug auf einen Stromfluss bei einem geschlossen Stromkreis (Kontakt zwischen den metallischen Kontakten 34 und 35 im Falle eines verschlissenen Ventilkolbens) und damit Daten in Bezug auf einen verschlissenen Ventilkolben 32 werden an die SPS-Ebene 70 (Speicherprogrammierbare Steuerung) des Fertigungsmanagementsystems 69 übermittelt und weiter an die MES- und/oder ERP-Ebene (Manufacturing Execution System/ Enterprise Resource Planing) 71 übertragen. Die erfassten Daten werden bevorzugt weiter an eine zentrale Cloud 72 übermittelt, welche im Austausch mit einer Datenbank/Server 73 steht. Auf diesem Weg können, wie beispielsweise hier gezeigt, Daten in Bezug auf den Verschleiß eines Ventils einer Anlage erfasst werden und an einer zentralen Stelle zusammen mit Daten (vieler) weiterer Anlagen abgelegt und verarbeitet werden. Dies bietet den Vorteil, dass Informationen über das Verschleißverhalten einer Vielzahl von Ventilen erhalten werden kann und daraus beispielsweise auf eine zu erwartende Lebenszeit geschlossen werden kann. Dies kann beispielsweise dazu verwendet werden, um rechtzeitig Ersatzstelle zu bestellen oder den Nutzer der Anlage über einen voraussichtlichen Zeitpunkt zu informieren, an welchen das Austauschen eines Ventils nötig werden könnte. Das hier gezeigte System ist keineswegs nur auf Ventile einer Blasformmaschine beschränkt, sondern kann für jegliche Arten von Verschleißteilen Anwendung finden, beispielsweise bei Abfülleinrichtungen, Etikettiermaschinen und dergleichen. So ist es möglich, dass wie in Figur 8 gezeigt Daten von einer der Blasformmaschine nachgeordneten Fülleinrichtung 80 über die entsprechenden SPS- 70 und ERP/MES-Ebenen 71 übermittelt werden oder Daten von externen Fülleinrichtungen 81 können erhalten werden. Sämtliche zentral erfassten Daten können ausgewertet werden und bei der Steuerung der verschiedenen Anlagen verwendet werden. Hierfür werden in entsprechender Reihenfolge Steuerungsbefehle über die ERP-/MES-Ebenen 71 and die SPS-Ebenen 70 der einzelnen Anlagen, beispielsweise einer Blasformmaschine oder einer Fülleinrichtung 80, 81 übermittelt.

Figur 9 zeigt eine weitere Ausführungsform der vorliegenden Erfindung. Gezeigt ist eine Ventilanordnung 25 mit einem verschlissenen Ventil in Anlehnung an Figur 4. Der Verschleiß der Kontaktfläche 33 des Ventilkolbens 32 ist weiter fortgeschritten und dieser weist statt einer ebenen Kontaktfläche 33 einen tieferliegenden verschlissenen Bereich 40 auf, welcher mit der Kontaktfläche 24 des Ventilblock 31 und einem höherliegenden nicht verschlissenen Bereich 41 aufweist, welcher ein Stück in den Kanal zur Blasform hineinragt. Die gezeigte Ausführungsform einer Verschleißerkennungseinrichtung zeigt ein in den Ventilkolben integriertes Metallstück 90, welches als Draht ausgeführt sein kann. In der Verlängerung des Metallstücks 90 ist ein (beweglicher) Schleifkontakt 91 angeordnet, welcher mit einer metallischen Ventilinnenwand bzw. einem metallischen Abschnitt der Ventilinnenwand 92 (stationär) in einem elektrisch leitfähigen Kontakt steht. Diese ist wiederum über ein Messgerät 37 zur Erfassung eines Stromflusses mit einem Pol der Stromquelle 23 verbunden. Weiterhin weist der Ventilblock 31 eine metallischen Kontaktfläche 93 auf, welche über eine elektrisch leitfähige Leitung 94 mit dem zweiten Pol der Stromquelle 23 verbunden ist. In einem verschlissenen Zustand des Ventils wird ein Stromkreis zwischen dem Metallteil 90 und der metallischen Kontaktfläche 93 geschlossen, wodurch das Messgerät 37 einen Stromfluss und somit einen Verschleiß erfassen kann. In einem nicht-verschlissenen Zustand des Ventils (hier nicht gezeigt) ist das Metallteil 90 komplett von dem Material des Ventilkolbens 32 umgeben, wobei kein elektrisch leitender Kontakt zwischen dem Metallteil 90 und der metallischen Kontaktfläche 93 vorliegt.

In einer alternativen Ausführungsform, welcher hier nur in Form eines weiteren Metallteils 95 angedeutet ist, wäre es denkbar, zusätzlich zu den Metallteil 90 ein weiteres Metallteil 95 oder mehrere weitere Metallteile anzuordnen, welche für eine Überwachung von verschiedenen Arten des Verschleißes verwendet werden können. So ist es denkbar, ein Ende des Metallteils 95 in Richtung der Kontaktfläche 33 in einem nicht-verschlissenen Zustand des Ventils von der Kontaktfläche 33 weiter beabstandet ist, als dies für das Metallteil 90 der Fall ist. In dem in Figur 9 gezeigten Zustand des Ventils ist der Ventilkolben 32 soweit verschlissen, dass ein elektrisch leitender Kontakt zwischen dem Metallteil 90 und der entsprechenden metallischen Kontaktfläche 93 vorliegt. Das Ende des weiteren Metallteils 95 hingegen ist noch vollständig vom dem Material des Ventilkolbens 32 umgeben und es besteht kein Kontakt zwischen dem weiteren Metallteil 95 und einer entsprechenden metallischen Kontaktfläche (nicht gezeigt). Schreitet nun der Verschleiß des Ventilkolbens 32 weiter fort, so kann das Ende des weiteren Metallteils 95 freigelegt werden und ein elektrisch leitender Kontakt zwischen diesem und der entsprechenden (nicht gezeigten) metallischen Kontaktfläche hergestellt werden. Darüber kann es vorgesehen sein, dass das andere Ende des weiteren Metallteils 95 über einen Schleifkontakt und einen entsprechenden metallischen Kontakt an der Ventilinnenwand mit einem weiteren Messgerät und einer weiteren Stromquelle verbunden ist (nicht gezeigt) und analog einen weiteren Verschleiß detektieren kann.

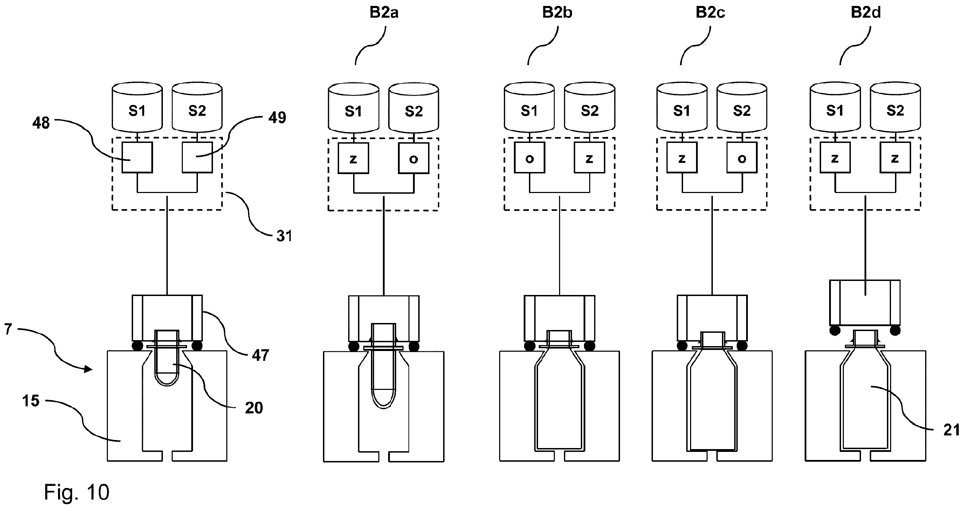

Figur 10 zeigt eine schematische Anwendung eines erfindungsgemäßen Verfahrens zum Betreiben einer Blasstation in einem zweiten Betriebsmodus, in dem alle Ventile ordnungsgemäß funktionieren. Gezeigt ist eine Blasstation 7, in welcher ein Kunststoffformling 20 zu einer Kunststoffflasche 21 geformt wird. Die Blasstation 7 weist einen Ventilblock 31 mit einem ersten Ventil 48 und einem zweiten Ventil 49, wobei das erste Ventil 48 mit einem Druckspeicher S1 (Fertigblasdruck) und das zweite Ventil 49 mit einem Druckspeicher S2 (Vorblasdruck) verbunden ist. Der Ventilblock 31 ist an der Blasdüse 47 angeordnet, welche wiederum dicht auf der Blasform 15 angeordnet ist. In einem ersten Prozessschritt B2a (Vorblasen) ist das erste Ventil 48 geschlossen (z) und das zweite Ventil 49 geöffnet (o), wodurch die Blasform und damit der Kunststoffvorformling 20 mit Druckluft unter dem im Druckspeicher S2 herrschenden Vorblasdruck von beispielsweise 5 bis 20 bar beaufschlagt wird. In einem zweiten Prozessschritt B2b (Fertigblasen) ist das zweite Ventil 49 geschlossen und das erste Ventil 48 geöffnet, wodurch die Blasform und damit der Kunststoffvorformling 20 mit Druckluft unter dem in Druckspeicher S1 herrschenden Fertigblasdruck von beispielsweise 15 bis 35 bar beaufschlagt wird, wobei der Fertigblasdruck größer ist als der Vorblasdruck. In einem dritten Prozessschritt B2c (Recycling) ist das erste Ventil 48 geschlossen und das zweite Ventil 49 geöffnet, wodurch die Luft in der Blasform 15, welche noch unter dem Fertigblasdruck des Druckspeichers S1 steht, in den Druckspeicher S2 entlassen wird bis in der Blasform 15 dasselbe Druckniveau vorliegt. In einem vierten und letzten Prozessschritt B2d (Entlüften) sind beide Ventile 48 und 49 geschlossen und der Druck wird durch Anheben der Blasdüse 47 aus der Blasform entlassen und die fertiggeblasene Kunststoffflasche 21 kann entnommen werden. Alternativ (hier nicht dargestellt) kann der verbleibende Restdruck über ein weiteres Ventil in eine Auslassöffnung E entlassen werden.

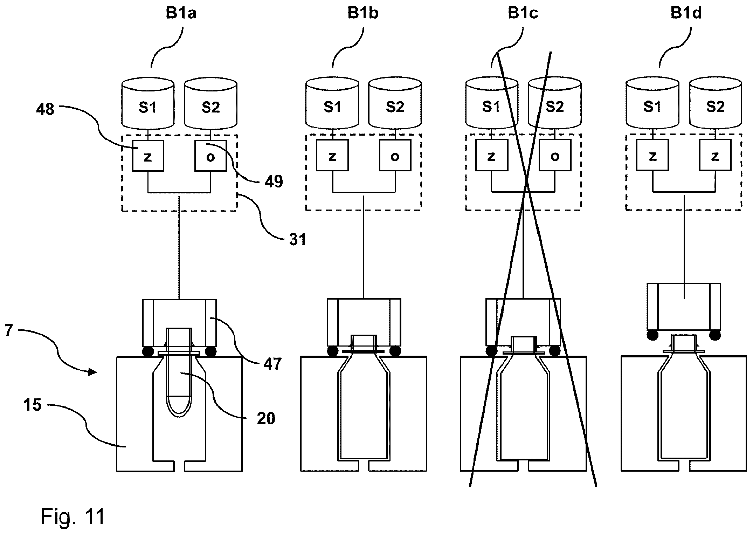

Figur 11 zeigt eine schematische Anwendung eines erfindungsgemäßen Verfahrens zum Betreiben einer Blasstation in einem ersten Betriebsmodus, in dem ein Ventil defekt und daher dauerhaft geschlossen ist. In diesem Fall ist das erste Ventil 48 defekt und daher geschlossen. Das zweite Ventil 49 kann in der gezeigten Ausführungsform als steuerbares Proportionalventil ausgestaltet sein, mit welchem auch niedrigere Durchflüsse erreicht werden können, wobei das zweite Ventil 49 mit Druckspeicher S2 verbunden ist. Somit ist es möglich die ersten beiden Prozessschritte B1a (Vorblasen) und B1b (Fertigblasen) auszuführen, aber nicht möglich den dritten Prozessschritt B1c (Recycling) auszuführen. In diesem Fall muss der komplette Druck über das Anheben der Blasdüse 47 im Prozessschritt B1d (Entlüften) abgelassen werden. Innerhalb der Konsole kann in dem Fall der Druckspeicher S2 mit einem höheren Druck befüllt werden, z.B. durch ein nicht gezeigtes Ventil in einer Verbindung zwischen S1 und S2. Alternativ könnte in einem Verschleißfall von Ventil 48, Ventil 49 über ein Umstecken der Schläuche mit Druckspeicher S1 verbunden werden (manuell oder automatisch).

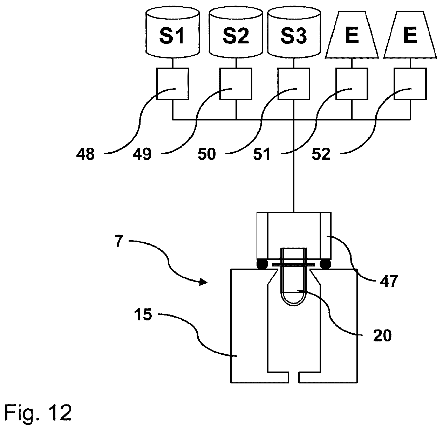

Figur 12 zeigt eine schematische Anwendung eines erfindungsgemäßen Verfahrens zum Betreiben einer Blasstation mit fünf Ventilen. Gezeigt ist ein erstes Ventil 48, welches mit einem Druckspeicher S1 (Fertigblasdruck), ein zweites Ventil 49, welches mit einem Druckspeicher S2 (Zwischenblasdruck), ein drittes Ventil 50, welches mit einem Druckspeicher S3 (Vorblasdruck) und ein viertes 51 und fünftes Ventil 52, welche beide mit einem Auslass E zur Entlüftung verbunden sind. In einem ersten Anwendungsbeispiel funktionieren alle fünf Ventile und die Anlage wird in einem zweiten Betriebsmodus betrieben. Der Blasprozess umfasst in diesem Fall die Schritte: Alle Ventile geschlossen, Öffnen des dritten Ventils 50 (Vorblasen), Schließen des dritten Ventils 50, Öffnen des zweiten Ventils 49 (Zwischenblasen), Schließen des zweiten Ventils 49, Öffnen des ersten Ventils 48 (Fertigblasen), Schließen des ersten Ventils, Öffnen des zweiten Ventils 49 (Recycling in den Druckspeicher S2), Schließen des zweiten Ventils 49, Öffnen des dritten Ventils 50 (Recycling in den Druckspeicher S3), Schließen des dritten Ventils 50, Öffnen des vierten 51 und fünften 52 Ventils (Entlüften der Blasform).

In einem zweiten Anwendungsbeispiel ist das zweite Ventil 49 verschlissen und daher dauerhaft geschlossen, wodurch die Schritte des Zwischenblasens und des Recyclings in den Druckspeicher S2 nicht durchgeführt werden können. In diesem Fall umfassen die Schritte in einem ersten Betriebsmodus: Alle Ventile geschlossen, Öffnen des dritten Ventils 50 (Vorblasen), Schließen des dritten Ventils 50, Öffnen des ersten Ventils 48 (Fertigblasen), Schließen des ersten Ventils 48, Öffnen des dritten Ventils 50 (Recycling in den Druckspeicher S3), Schließen des dritten Ventils 50, Öffnen des vierten 51 und fünften 52 Ventils (Entlüften der Blasform).

Die Schritte können sich bei Ausführungsformen auch leicht überschneiden, wenn z.B. 48 in einer Zuströmleitung liegt, welche nicht dieselbe ist wie die der anderen Ventile 49-52, z.B. an oder in Reihe mit einer hohlen Reckstange 45 (nicht gezeigt).

In einem dritten Anwendungsbeispiel sind das zweite Ventil 49 und das fünfte Ventil 52 verschlissen und daher dauerhaft geschlossen, wodurch die Schritte des Zwischenblasens und des Recyclings in den Druckspeicher D2 nicht durchgeführt werden können und das Entlüften des Blasform nur über das vierte Ventil 51 und nicht über das fünfte Ventil 52 erfolgen kann. In diesem Fall umfassen die Schritte in einem ersten Betriebsmodus: Alle Ventile geschlossen, Öffnen des dritten Ventils 50 (Vorblasen), Schließen des dritten Ventils 50, Öffnen des ersten Ventils 48 (Fertigblasen), Schließen des ersten Ventils 48, Öffnen des dritten Ventils 50 (Recycling in den Druckspeicher S3), Schließen des dritten Ventils 50, Öffnen des vierten 51 Ventils (Entlüften der Blasform).

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: Zuführeinrichtung, Sägezahnstern
- 3: Erwärmungseinrichtung
- 4: Einlaufstern
- 5: Greifer
- 6: Blasrad
- 7: Blasstation
- 8: Kompressor mit Kompressorstufen
- 9: Zuleitung Druckluft
- 10: Rückleitung Druckluft
- 11: Entnahmestern
- 12: Greifer
- 13: Drehverteiler
- 14: Leitung
- 15: Blasform
- 20: Kunststoffvorformling
- 21: Kunststoffbehältnis, Kunststoffflasche
- 22: Ventilhülse
- 23: Stromquelle
- 24: Kontaktfläche Ventilblock
- 25: Ventilanordnung
- 26: Dichtung
- 27: Dichtung
- 28: Vorsteuerventil
- 29: Kopfbereich Ventilkolben
- 30: Ventileinheit
- 31: Ventilblock
- 32: Ventilkolben
- 33: Kontaktfläche Ventilkolben
- 34: metallische Kontaktfläche Ventilkolben
- 35: metallische Kontaktfläche Ventilblock
- 36: elektrische Leitung
- 37: Messgerät, Messinstrument
- 38: Zuleitung von Druckspeicher
- 39: Zuleitung zur Blasform
- 40: verschlissener Bereich der Kontaktfläche Ventilkolben
- 41: nicht verschlissener Bereich der Kontaktfläche Ventilkolben
- 42: metallischer Kippschalter
- 43: Induktionssensor
- 44: Halterung Ventilblock
- 45: Reckstange
- 46: Kunststoffdichtfläche
- 47: Blasdüse
- 48: erstes Ventil
- 49: zweites Ventil
- 50: Ventil
- 51: Ventil
- 52: Ventil
- 60: Ventilanordnung
- 61: Ventilkolben
- 62: metallische Kontaktfläche
- 69: Fertigungsmanagementsystem
- 70: SPS
- 71: ERP/MES
- 72: Cloud, Internet
- 73: Datenbank, Server
- 80: Fülleinrichtung
- 81: Fülleinrichtung
- 90: Metallteil
- 91: Schleifkontakt
- 92: Ventilinnenwand
- 93: metallische Kontaktfläche
- 94: elektrisch leitfähige Leitung
- 95: weiteres Metallteil
- B1a: erster Betriebsmodus, Vorblasen
- B1b: erster Betriebsmodus, Fertigblasen
- B1c: erster Betriebsmodus, Recycling
- B1d: erster Betriebsmodus, Entlüftung durch Anheben der Blasdüse
- B2a: zweiter Betriebsmodus, Vorblasen
- B2b: zweiter Betriebsmodus, Fertigblasen
- B2c: zweiter Betriebsmodus, Recycling
- B2d: zweiter Betriebsmodus, Entlüftung durch Anheben der Blasdüse
- E: Auslass
- o: Ventil offen
- z: Ventil geschlossen
- E: Auslass
- S1, S2, S3, S4: Druckspeicher

## Patentansprüche

1. Vorrichtung zum Behandeln von Behältnissen mit einer Transportvorrichtung zum Transport eines Behältnisses entlang eines vorgegebenen Transportpfads, wobei die Vorrichtung wenigstens eine Behältnisbehandlungseinrichtung und bevorzugt eine Vielzahl von Behältnisbehandlungseinrichtungen aufweist, wobei die wenigstens eine Behältnisbehandlungseinrichtung wenigstens ein Verschleißelement aufweist, wobei die wenigstens eine Behältnisbehandlungseinrichtung eine Verschleißerkennungseinrichtung zur Erfassung von Verschleißdaten in Bezug auf einen Verschleiß des wenigstens einen Verschleißelements aufweist,
**dadurch gekennzeichnet, dass**
die Verschleißerkennungseinrichtung wenigstens eine Sensoreinrichtung zur Erfassung der Verschleißdaten in Bezug auf den Verschleiß des wenigstens einen Verschleißelements aufweist.

2. Vorrichtung nach Anspruch 1,
**dadurch gekennzeichnet, dass**
die Vorrichtung eine Kommunikationseinrichtung zur Übertragung von Verschleißdaten in Bezug auf den Verschleiß des wenigstens einen Verschleißelements an eine nicht-flüchtige Speichereinrichtung aufweist.

3. Vorrichtung nach einem der vorhergehenden Ansprüche,
**dadurch gekennzeichnet, dass**
es sich bei dem wenigstens einen Verschleißelement um ein Ventil und/oder einen Ventilkolben eines Ventils zur Zu- und/oder Abführung eines fließfähigen Mediums handelt.

4. Vorrichtung nach Anspruch 3,
**dadurch gekennzeichnet, dass**
eine Fläche des Ventilkolbens und eine zugeordnete Kontaktfläche der wenigstens einen Behältnisbehandlungseinrichtung, insbesondere des Ventils, zumindest bereichsweise ein elektrisch leitfähiges Material aufweist.

5. Vorrichtung nach Anspruch 4,
**dadurch gekennzeichnet, dass**
durch einen Kontakt zwischen der Fläche des Ventilkolbens und der zugeordneten Kontaktfläche der Behältnisbehandlungseinrichtung ein Stromkreis schließbar ist.

6. Vorrichtung nach einem der vorhergehenden Ansprüche,
**dadurch gekennzeichnet, dass**
die wenigstens eine Behältnisbehandlungseinrichtung einen metallischen Schalter aufweist, welcher dazu geeignet und bestimmt ist, bei einem Kontakt mit der Fläche des Ventilkolbens einen elektrischen Stromkreis zu schließen.

7. Vorrichtung nach einem der vorhergehenden Ansprüche 4 bis 6,
**dadurch gekennzeichnet, dass**
die Fläche des Ventilkolbens in einem Winkel > 1° und < 179° auf einen Vektor einer Bewegungsrichtung des Ventilkolbens steht, entlang welcher der Ventilkolben beim Öffnen oder Schließen des Ventils bewegt wird.

8. Vorrichtung nach einem der vorhergehenden Ansprüche,
**dadurch gekennzeichnet, dass**
die wenigstens eine Sensoreinrichtung dazu geeignet und bestimmt ist, einen Stromfluss in dem geschlossenen Stromkreis zu erfassen.

9. Vorrichtung nach einem der vorhergehenden Ansprüche,
**dadurch gekennzeichnet, dass**
die wenigstens eine Sensoreinrichtung einen Induktionssensor aufweist, welcher dazu geeignet und bestimmt ist, den Abstand zwischen der Fläche des Ventilkolbens und dem Induktionssensor zu erfassen.

10. Vorrichtung zum Behandeln von Behältnissen mit einer Transportvorrichtung zum Transport eines Behältnisses entlang eines vorgegebenen Transportpfads, wobei die Vorrichtung wenigstens eine Behältnisbehandlungseinrichtung und bevorzugt eine Vielzahl von Behältnisbehandlungseinrichtungen aufweist, wobei die wenigstens eine Behältnisbehandlungseinrichtung wenigstens zwei Ventile aufweist, über welche ein fließfähiges Medium einem Behältnis zuführbar und/oder von dem Behältnis abführbar ist,
**dadurch gekennzeichnet, dass**
die wenigstens eine Behältnisbehandlungseinrichtung in einem ersten und in einem zweiten Betriebsmodus betreibbar ist, wobei in einem ersten Betriebsmodus wenigstens ein Ventil aktiv ist und wenigstens ein Ventil nicht aktiv ist und in einem zweiten Betriebsmodus alle Ventile aktiv sind und/oder die Vorrichtung eine Verschleißerkennungseinrichtung zur Erfassung von Verschleißdaten in Bezug auch einen Verschleiß eines der wenigstens zwei Ventile aufweist.

11. Vorrichtung zum Behandeln von Behältnissen nach Anspruch 9,
**dadurch gekennzeichnet, dass**
die wenigstens eine Behältnisbehandlungseinrichtung wenigstens drei, bevorzugt wenigstens vier und besonders bevorzugt eine Vielzahl von Ventilen aufweist und insbesondere einen Ventilblock aufweist, an welchem wenigstens zwei, bevorzugt wenigstens drei und besonders bevorzugt eine Vielzahl von Ventilen angeordnet sind.

12. Verfahren zum Behandeln von Behältnissen mit einer Transportvorrichtung, welche ein Behältnis entlang eines vorgegebenen Transportpfads transportiert, mit wenigstens einer Behältnisbehandlungseinrichtung und bevorzugt einer Vielzahl von Behältnisbehandlungseinrichtungen, wobei die wenigstens eine Behältnisbehandlungseinrichtung wenigstens ein Verschleißelement aufweist, wobei die wenigstens eine Behältnisbehandlungseinrichtung eine Verschleißerkennungseinrichtung zur Erfassung von Verschleißdaten in Bezug auf einen Verschleiß des wenigstens einen Verschleißelements aufweist, wobei die Verschleißerkennungseinrichtung eine Sensoreinrichtung aufweist und mit einer Kommunikationseinrichtung zur Übertragung von Verschleißdaten in Bezug auf einen Verschleiß des wenigstens einen Verschleißelements,
**dadurch gekennzeichnet, dass**
die Sensoreinrichtung die Verschleißdaten in Bezug auf einen Verschleiß des wenigstens einen Verschleißelements direkt erfasst.

13. Verfahren zum Behandeln von Behältnissen nach Anspruch 12,
**dadurch gekennzeichnet, dass**
es sich bei dem wenigstens einen Verschleißelement um einen Ventilkolben eines Ventils zur Zu- und/oder Abführung eines fließfähigen Mediums handelt und/oder das wenigstens eine Ventil in Abhängigkeit von den erfassten Verschleißdaten aktivierbar und/oder deaktivierbar ist.

14. Verfahren zum Behandeln von Behältnissen mit einer Transportvorrichtung, welche ein Behältnis entlang eines vorgegebenen Transportpfads transportiert, mit wenigstens einer Behältnisbehandlungseinrichtung und bevorzugt einer Vielzahl von Behältnisbehandlungseinrichtungen, wobei die wenigstens eine Behältnisbehandlungseinrichtung wenigstens zwei Ventile aufweist, um einem Behältnis ein fließfähiges Medium zuzuführen und/oder von diesem abzuführen,
**dadurch gekennzeichnet, dass**
die wenigstens eine Behältnisbehandlungseinrichtung in einem ersten Betriebsmodus betreibbar ist, in welchem wenigstens ein Ventil deaktiviert ist und wenigstens ein Ventil aktiviert ist und/oder in einem zweiten Betriebsmodus betreibbar ist, in welchem alle Ventile aktiviert sind.

15. Verfahren zum Behandeln von Behältnissen nach Anspruch 14,
**dadurch gekennzeichnet, dass**
es sich im ersten Betriebsmodus bei dem wenigstens einen deaktivierten Ventil um ein Recyclingventil handelt und/oder ein Wechsel zwischen dem ersten Betriebsmodus und dem zweiten Betriebsmodus ohne ein Anhalten der wenigstens einen Behältnisbehandlungseinrichtung durchführbar ist.
